# EUROPÄISCHE PATENTSCHRIFT

(11) **EP 3 928 659 B1**
(45) Veröffentlichungstag und Bekanntmachung des Hinweises auf die Patenterteilung: **26.07.2023**
(21) Anmeldenummer: 21181032.0
(22) Anmeldetag: 20.04.2016
(51) Int. Cl.: A46B 9/04

(54) **ELEKTROGERÄT FÜR DIE KÖRPERPFLEGE**
ELECTRIC APPLIANCE FOR PERSONAL CARE
APPAREIL ÉLECTRIQUE DE SOINS CORPORELS

(30) Priorität: 04.05.2015 EP 15166214
(43) Veröffentlichungstag der Anmeldung: 29.12.2021
(62) Teilanmeldung aus: 19165630.5
(73) Patentinhaber: Trisa Holding AG, 6234 Triengen (CH)
(72) Erfinder: Bärtschi, Armin, 4652 Winznau (CH); Fischer, Herbert, 5057 Reitnau (CH); Schär, Michael, 6243 Egolzwil (CH)
(74) Vertreter: Schaad, Balass, Menzl & Partner AG

(56) Entgegenhaltungen:
- EP-A2- 1 790 312
- WO-A1-03/073958
- WO-A1-2013/076904
- US-A1- 2013 000 061
- US-B1- 6 546 585

## Beschreibung

Die Erfindung betrifft eine Zahnbürste wie in den Ansprüchen 1 und 15 definiert.

Aus der US 5,365,627 ist ein Mundhygienegerät mit einem Handgriff und einem automatischen Schafteinführungssystem bekannt. Das Mundhygienegerät weist auf der Antriebsmotorwelle ein Paar von schlüsselartigen Erhebungen auf. Eine Bohrung im Schaft nimmt dabei die Welle auf und Schlitze des Schafts nehmen die schlüsselartigen Erhebungen auf. Ein Paar von Manschetten an dem Schaft weist jeweils eine rampenartige Struktur auf, um die schlüsselartigen Erhebungen aufzunehmen und mit ihnen in Eingriff zu gelangen. Wenn der Schaft mit dem Handgriff gekoppelt wird, werden mittels einer Gleitbewegung der schlüsselartigen Erhebungen auf den Rampen die schlüsselartigen Erhebungen in die Schlitze eingeführt. An der Basis der Welle ist ein sich radial nach aussen erstreckender Flansch angeordnet, welcher von einem Paar flexibler Arme, die von der Basis des Schafts abragen und jeweils eine Ausnehmung aufweisen, aufgenommen wird. Beim Koppeln des Schafts mit dem Handgriff, gelangt der Flansch in Eingriff mit den flexiblen Armen und biegt diese auseinander wobei bei einer weiteren Bewegung des Schafts in Richtung des Hangriffs der Flansch in die Ausnehmungen der Arme einschnappt. Beim Abziehen des Flansches von dem Handgriff bewirkt der Flansch, dass sich die flexiblen Arme wiederum auseinander biegen, um den Flansch aus ihren Ausnehmungen freizugeben.

Weitere Kopplungsstrukturen für einen Handgriff und entsprechende Aufsteckbürsten einer elektrischen Zahnbürste sind aus dem US-Patent 3,088,148, der WO 2011/073848, aus US6546585 sowie dem US-Patent 3,369,265 bekannt. Elektrische Zahnbürsten bei denen der Vibrationsantrieb im Handgriff in unterschiedlichen Positionen bezüglich der Kupplungs- bzw. Schnittstelle zwischen dem Handgriff und der Aufsteckbürste angeordnet ist, sind aus der WO 2008/130246 A1, der DE 1 632 389 sowie dem US-Patent 3,685,080 bekannt.

Es ist die Aufgabe der vorliegenden Erfindung, ein universell einsetzbares Elektrogerät für verschiedenste Anwendungen in der Körperpflege zu schaffen, welches auf effiziente Weise eine einfache und sichere Montage sowie einen festen Halt für die jeweiligen Aufsteckteile gewährleistet und ausserdem eine effektive Übertragung der Vibration vom Handgriff auf das Aufsteckteil sicherstellt.

Diese Aufgabe wird erfindungsgemäss gelöst durch eine Zahnbürste wie in den Ansprüchen 1 und 15 definiert.

In einer bevorzugten Ausführungsform der vorliegenden Erfindung schliessen die Anschlagfläche und die Längsachse des Handgriffs A_{G} einen Winkel α zwischen 30° und 70° vorzugsweise zwischen 45° und 55°. Vermittels der auf diese Weise abgeschrägten Anschlagfläche kann die für die Kupplung zur Verfügung stehende Berührungsfläche zwischen der steckerartigen Kupplungsstruktur und der gegengleichen buchsenartigen Kupplungsstruktur vergrössert werden (mit anderen Worten, die Berührungsfläche der Schnittstelle als solcher wird grösser als etwa bei einer herkömmlichen senkrechten Ausgestaltung). Dies ist im Hinblick auf eine sichere Führung des Aufsteckteils sowie ein verbessertes, d.h. höheres, Abzugsgewicht wünschenswert.

In einer weiteren bevorzugten Ausführungsform der vorliegenden Erfindung ist die Abmessung von der Anschlagfläche zum hinteren Ende des Handgriffs auf der Vorderseite grösser als auf der Rückseite, so dass die Anschlagfläche von vorne nach hinten verläuft. Diese Art der Ausgestaltung hat sich beim Handling als vorteilhaft erwiesen.

Die Vorderseite ist im Übrigen generell diejenige Seite des Handgriffs bzw. des Elektrogeräts, auf welcher der Daumen bei der Betätigung (z.B. beim Ein- und Ausschalten) aufgelegt wird. Die Vorderseite ist generell auch diejenige Seite zu der hin ggf. das Borstenfeld einer Aufsteckbürste gerichtet ist. Die Rückseite ist entsprechend die 180° gegenüberliegende Seite.

In einer weiteren bevorzugten Ausführungsform der vorliegenden Erfindung schliessen die Anschlagfläche des Handgriffs und die, gegenüber der Längsachse des Handgriffs A_{G} vorzugsweise geneigte, Rotationsachse des Elektromotors A_{M} einen Winkel ϕ zwischen 35° und 90° bevorzugt zwischen 50° und 70°. Auf diese Weise kann die Vibrationseinheit, welche erfindungsgemäss einen Elektromotor mit Exzenter aufweist, besonders effektiv in den Bereich der Schnittstelle, vorzugsweise in die Nähe des Basisbereichs der steckerartigen Kupplungsstruktur gebracht werden.

In einer weiteren bevorzugten Ausführungsform der vorliegenden Erfindung ermöglichen die steckerartige Kupplungsstruktur des Handgriffs und die gegengleiche buchsenartige Kupplungsstruktur des Aufsteckteils ein gerades Aufstecken, wobei vorzugsweise die Längsachse der steckerartigen Kupplungsstruktur A_{K} parallel versetzt ist zur Längsachse des Handgriffs A_{G}. Diese Ausgestaltung hat sich als besonders vorteilhaft für das Handling erwiesen.

Bevorzugt weist der Handgriff im Bereich der steckerartigen Kupplungsstruktur einen Nocken auf, welcher mit einer gegengleichen Ausnehmung des Aufsteckteils in der Art einer Schnappverbindung zusammenwirkt.

Zur Begriffsdefinition:
- Handgriff - ist definiert als gebrauchsfertiges Teil bestehend aus Handteil und Verschlussdeckel sowie dem Innenleben;
- Handteil - ist definiert als Handkörper mit Innenleben;
- Handkörper - ist definiert als Spritzgussteil bestehend aus Grundkörper(n) und Umspritzkörper(n).

Gemäß der vorliegenden Erfindung ist das Material aus welchem der Handkörper beziehungsweise der Grundkörper des Handkörpers (und insbesondere auch der Nocken) gebildet ist härter als das Material aus welchem das Aufsteckteil beziehungsweise der Grundkörper des Aufsteckteils (und insbesondere auch die Ausnehmung) gebildet ist. Generell werden bevorzugt jeweils Polypropylen-Materialien mit unterschiedlichen e-Modulen verwendet (ein tieferes e-Modul gibt jeweils ein weicheres Material an). Der Grund dafür, dass das Material des Aufsteckteils bzw. des Grundkörpers des Aufsteckteils weicher gewählt wird als jenes des Handkörpers bzw. des Grundkörpers des Handkörpers, liegt in der gewünschten Langlebigkeit der Schnappverbindung begründet, denn aufgrund des weicheren Materials generiert das Aufsteckteil bzw. der Grundkörper des Aufsteckteils weniger Abrieb am Nocken und generell der ganzen steckerartigen Kupplungsstruktur.

Generell können so die Reibungskräfte zwischen der Aufsteckteilwand und der Schnittstellenoberfläche bzw. der steckerartigen Kupplungsstruktur minimal gehalten werden und der durch den Wechsel verursachte Verschleiss findet vorzugsweise am Grundkörper des Aufsteckteils statt.

Vorzugsweise kann die steckerartige Kupplungsstruktur des Handgriffs einen leichten Verzug aufweisen, so dass Abzugsgewicht der Schnappverbindung erhöht werden kann.

Vorzugsweise ist der Grundkörper des Handkörpers aus Hartkomponente, nämlich Total PPH 5042 von Total SA (Total ist ein Markenzeichen von Total SA) oder Moplen HP548L von LyondellBasell Industries Holdings B.V. (Moplen ist ein Markenzeichen von LyondellBasell Industries Holdings B.V.) gebildet und die Hartkomponente des Grundkörpers des Aufsteckteils vorzugsweise aus PP Tipplen R359 von TVK Plc. (Tipplen ist ein Markenzeichen TVK Plc.), gebildet.

Das e-Modul der Hartkomponente des Grundkörpers des Handkörpers beträgt zwischen 1300 MPa und 2500 MPa vorzugsweise zwischen 1300 MPa und 1800 MPa. Das e-Modul der Hartkomponente des Grundkörpers des Aufsteckteils beträgt zwischen 700 MPa und 1500 MPa vorzugsweise zwischen 900 MPa und 1250 MPa

In einer weiteren bevorzugten Ausführungsform der vorliegenden Erfindung ist der Nocken in der steckerartigen Kupplungsstruktur baumförmig ausgebildet, vorzugsweise mit einem geraden Stamm und einer kreisförmigen Krone. Hierdurch kann eine besonders effektive Schnappverbindung mit der gegengleichen Ausnehmung bereitgestellt werden.

Der gerade Stamm weist vorzugsweise eine Breite von 2 mm bis 4 mm, vorzugsweise von 2,5 mm bis 3,5 mm auf. Die kreisförmige Krone weist vorzugsweise einen Durchmesser von 2 mm bis 5 mm, vorzugsweise von 3 mm bis 4,5 mm auf.

Die Gesamtlänge des Nockens ab seinem Ansatzpunkt beträgt bevorzugt 4 mm bis 7 mm, besonders bevorzugt 5 mm bis 6 mm. Der Abstand des Kreismittelpunktes (Krone) ab dem Ansatzpunkt des Nockens beträgt vorzugsweise 2 mm bis 6 mm, vorzugsweise 3 mm bis 4 mm. Die Höhe des Nockens (bzw. der Absetzung des Nockens von der restlichen Oberfläche der dritten Stufe) beträgt vorzugsweise von 1 mm bis 3 mm, besonders bevorzugt 1,5 mm bis 2,5 mm.

Die Ausnehmung auf dem Aufsteckteil ist gegengleich zum Nocken und weist vorzugsweise eine Toleranz gegenüber dem Nocken von 0 mm bis 0,4 mm, vorzugsweise von 0,15 mm bis 0,25 mm auf. Dies ist hinsichtlich der gewünschten Langlebigkeit der Schnappverbindung vorteilhaft. Weiter vorzugsweise weist die nockengegengleiche Ausnehmung auf dem Aufsteckteil in Verlängerung (d.h. in Längsrichtung der nockengegengleichen Ausnehmung zum freien Ende des Aufsteckteils hin gesehen) einen Schlitz auf, welcher weiter zum Einstellen der gewünschten Haltestärke bzw. des Abzugsgewichts dient. Die Länge des Schlitzes (d.h. ohne die nockengegengleiche Ausnehmung) beträgt 1 mm bis 8 mm, bevorzugt 1 mm bis 5 mm.

Vermittels der geometrischen Ausgestaltung des Nockens und der Ausnehmung sowie der entsprechenden Materialauswahl kann ein Abzugsgewicht in der Grössenordnung von 2 kg bis 6 kg, vorzugsweise von 2 kg bis 4 kg erzielt werden.

Für die Mundhygiene sind dabei vorzugsweise Anwendungen als manuelle Zahnbürste vorgesehen (hier insbesondere in Form einer nicht motorisierten Mehrwegzahnbürste, denn die Kupplungsstruktur bzw. die Schnittstelle können auch für manuelle, nicht motorisierte Anwendungen eingesetzt werden). Dabei kann der Handgriff eine lange Zeit genutzt werden und ausgetauscht wird lediglich die Aufsteckbürste.

Besonders bevorzugt wird die vorliegende Erfindung aber für elektrische Zahnbürsten zum Einsatz kommen, insbesondere für Vibrations- /Schallzahnbürsten.

### Bevorzugte Herstellung

Die Herstellung des erfindungsgemässen Handkörpers und des erfindungsgemässen Aufsteckteils bzw. Grundkörper und Umspritzkörper des Aufsteckteils erfolgt vorzugsweise durch Spritzguss in einem Spritzgusswerkzeug.

Der Handkörper wird bevorzugt in einem Zwei-, Drei- oder Mehrstationen-Werkzeug (z.B. Helikopterwerkzeug) gefertigt. Dabei wird zunächst die Hartkomponente gespritzt und so der Grundkörper geschaffen, anschliessend werden ein oder zwei Weichkomponenten, jeweils Umspritzkörper genannt, an den Grundkörper angespritzt (im gleichen Spritzvorgang), schliesslich wird der fertige Handkörper im geschlossenen Zustand dem Spritzgusswerkzeugs entnommen. Gewisse Komponenten im Grundkörper oder auch den Umspritzkörpern können mit Seitenschiebern gestaltet werden (Öffnungen, Ausnehmungen, etc.). Dabei erfordert der Spritzguss von mehreren Weichkomponenten im selben Schritt eine spezielle Geometrie des entsprechenden Teils, wobei die Anforderung ist, dass die Weichkomponenten explizit separate Volumen bzw. Zonen bilden und nicht direkt aneinander angrenzen.

Die Aufsteckteile bzw. Aufsteckbürsten werden vorzugsweise im Ein-Komponenten-Spritzguss hergestellt (vorzugsweise aus einer Hartkomponente). Es ist aber auch möglich, die Aufsteckteile im Mehr-Komponenten-Spritzguss herzustellen und so jeweils eine oder mehrere Hart- und/oder Weichkomponenten einzusetzen und so den Grundkörper und mehrere Umspritzkörper zu schaffen.

Die Beborstung der Aufsteckbürsten erfolgt vorzugsweise im AFT-Verfahren (Anchor Free Tufting), durch konventionelles Ankerstanzen, durch IMT (In Mould Tufting), durch IAP (Integrated Anchorless Production) oder aber durch das Spritzen von Borsten bzw. Reinigungselementen.

Insgesamt wird erfindungsgemäss ein kleines, leichtes und handliches, stiftförmiges Gerät für Körperpflege- und Kosmetik-Anwendungen geschaffen. Dies erlaubt den einfachen Transport (beispielsweise in einer Beauty Case) und die genaue Applikation/Anwendung.

Das Volumen des Handgriffs (den Verschlussdeckel mitgerechnet) liegt zwischen 75 cm³ und 150 cm³.

Das Gewicht des Handgriffs beträgt etwa 35 g bis 50 g, vorzugsweise 40 g bis 47 g.

Das Gewicht der Aufsteckteile beträgt etwa 5 g bis 25 g, vorzugsweise 7 g bis 15 g.

Der erfindungsgemässe Handkörper für den Handgriff wird vorzugsweise im Spritzgussverfahren aus drei Materialkomponenten gebildet, nämlich vorzugsweise einer Hartkomponente und zwei Weichkomponenten.

Die erste Komponente ist dabei vorzugsweise die Hartkomponente. Die Hartkomponente bildet den Grundkörper des Handkörpers, welcher die handgriffseitige, steckerartige Kupplungsstruktur für die Schnittstelle mit der Aufsteckbürste umfasst sowie eine korrespondierende Verschlussstruktur für den Verschlussdeckel, welcher den Handgriff regelmässig verschliesst. Auf den Grundkörper werden des Weiteren die Weichkomponenten als Umspritzkörper aufgebracht. Zudem umschliesst der Grundkörper bevorzugt das Innenleben/den Innenraum des Handkörpers.

Der Grundkörper enthält weiterhin vorzugsweise eine oder mehrere Flachstellen, damit der Handgriff in einer Position stabil liegen kann, und weist überdies bevorzugt eine vorzugsweise frei stehende Position für ein Entlüftungsloch auf (d.h. das Entlüftungsloch ist in der Ruhelage, wenn der Grundkörper auf den Flachstellen auf einer ebenen Fläche aufliegt, nicht verdeckt).

Das Entlüftungsloch definiert einen Durchgang durch vorhandene Hart- und / oder Weichkomponenten von der Umgebung (dem Aussenraum) in den Innenraum des Handgriffs bzw. des Handteils/Handkörpers. Es wird bevorzugt durch eine Entlüftungsmembrane verschlossen, wobei die Entlüftungsmembrane auf der Innenseite, d.h. im Innenraum des Handkörpers angebracht ist. Das Gehäuse wird auf diese Weise dicht verschlossen, so dass kein Wasser und Staub eindringen sondern nur ein Gasaustausch mit dem Innenraum stattfindet. Die Entlüftungsmembrane wird auf der zylindrischen Innenfläche des Hohlraums mit einem Applikationsdorn aufgeklebt.

Zweck des Entlüftungslochs ist es, ein Überdruckventil bereitzustellen und eine Entgasung des Innenraums von Gas aus einem Akku oder einer Batterie zu ermöglichen.

Der Anspritzpunkt für die Hartkomponente des Handkörpers ist an der Vorderseite gelegen, vom Daumengriff her gesehen in Richtung Aufsteckteil.

Eine Weichkomponente des Handkörpers welche gespritzt wird bildet vorzugsweise die Schalterpartie, welche den funktionalen Übergang von innen nach aussen repräsentiert. Direkt unter der Schalterpartie ist vorzugsweise auf einer Printplatte der Schalter selbst angebracht. Die Weichkomponente kann aus diesem Grund mit einem Ein-/Ausschalter-Symbol versehen sein.

Der Anspritzpunkt für die erste Weichkomponente des Handkörpers ist vorzugsweise auf der Vorderseite des Handkörpers bzw. Grundkörpers, im Bereich der Schalterpartie. Die erste Weichkomponente deckt vorzugsweise den Anspritzpunkt der Hartkomponente ab bzw. liegt über diesem.

Die zweite Weichkomponente des Handkörpers dient bevorzugt der farblichen Gestaltung der Frontpartie, dem Branding (Aufdruck) und auch der Griffigkeit des Handgriffs. Sie kann neben dem Grundkörper aus Hartkomponente und der ersten Weichkomponente eine weitere Farbe auf den Körper bringen. Der Anspritzpunkt liegt vorzugsweise auf der Vorderseite des Handkörpers bzw. Grundkörpers, unterhalb der Schalterpartie. Die erste Weichkomponente bildet mit einer Zone eine Insel innerhalb der zweiten Weichkomponente.

Die Weichkomponenten sollen generell einen guten Halt bzw. eine nicht-rutschige Oberfläche bereitstellen. Zusätzlich dämpfen die Weichkomponenten die Vibrationen ab.

Im vorderen Teil des Handgriffes sind auf der Vorder- und Rückseite des Gerätes jeweils eine Zone aus Weichmaterial angebracht welche es dem Nutzer erlauben das Gerät wie ein stiftförmiges Schreibgerät zu halten. Mind. eine der Zonen ist vorzugsweise leicht konkav ausgestaltet. Die beiden Zonen sind vorzugsweise aus dem gleichen Weichmaterial in einem Arbeitsschritt gefertigt.

Die Länge des Handgriffs beträgt mit montiertem Verschlussdeckel bis zum Ende der Schnittstelle bzw. der steckerartigen Kupplungsstruktur vorzugsweise 130 mm bis 190 mm, besonders bevorzugt 160 mm bis 175 mm; ohne montierten Verschlussdeckel, d.h. in Form des Handteils, bis zum Ende der Schnittstelle bzw. der steckerartigen Kupplungsstruktur von 120 mm bis 170 mm, vorzugsweise von 145 mm bis 151 mm.

Der Handgriff weist bevorzugt eine annährend rundliche Gestaltung im Querschnitt auf, eher höher als breit, d.h. er besitzt üblicherweise eine grössere vertikale Ausdehnung. Weiter ist der Handgriff in Längsrichtung vorzugsweise tailliert. Dabei ist regelmässig das freie Ende (gegenüber der Kupplungsstruktur für das Aufsteckteil) am breitesten. Die Taillierung ist bevorzugt zwischen dem freien Ende und dem Daumengriff bzw. der Schalterpartie vorgesehen. Der Bereich der Schalterpartie bzw. der Übergang zum Hals ist vorzugsweise die zweitbreiteste Stelle. Diese Taillierung erlaubt dem Nutzer ebenfalls das Gerät wie ein stiftartiges Schreibgerät zu halten und dieses entsprechend Präzise zu führen.

Die Breite des Handgriffs beträgt 12 mm bis 25 mm, an der breitesten Stelle bevorzugt 19 bis 23 mm und vorzugsweise 12 bis 15 mm an der schmalsten Stelle.

Die Höhe des Handgriffs beträgt 14 mm bis 30 mm, an der höchsten Stelle vorzugsweise 20 mm bis 25 mm und bevorzugt 15 mm bis 20 mm an der am wenigsten hohen Stelle.

Innerhalb des Handgriffs bzw. des Handteils ist bevorzugt ein Trägerelement angeordnet, welches als Gerüst für das Innenleben des Handgriffs bzw. des Handteils dient.

Bei der Ausführung des Trägerelements wird grundsätzlich zwischen einer wieder aufladbaren Akku Version und einer Einweg Batterie Version unterschieden, welche sich z.T. hinsichtlich ihrer Komponenten deren Anordnung und Eigenschaften unterscheiden.

### Bevorzugte Ausgestaltung steckerförmige Kupplungsstruktur (Schnittstelle Handgriff)

Der handgriffseitige Teil der erfindungsgemässen Schnittstelle (d.h. die steckerförmige Kupplungsstruktur) weist bevorzugt drei Stufen auf. Diese drei Stufen sind längs aufeinander folgend angeordnet. Sie weisen, zumindest in den Umfangsbereichen, jeweils klar abgegrenzte Übergänge bzw. Sprünge auf. Die Längsachse der steckerförmigen Kupplungsstruktur A_{K} verläuft bevorzugt parallel zur Längsachse des Handgriffs A_{G}. Es ist grundsätzlich aber auch Ausführungsformen denkbar, bei denen die beiden Achsen kollinear sind.

Die erste Stufe der steckerförmigen Kupplungsstruktur weist vorzugsweise einen im Längs-Querschnitt rampenförmigen Einfädelverlauf auf. Die zweite und dritte Stufe sind hinsichtlich ihres Durchmessers vorzugsweise jeweils im Wesentlichen konstant, das heisst innerhalb der jeweiligen Stufe gibt es keine Durchmesserveränderung. Die einzelnen Stufen sind allerdings nicht immer rund oder annähernd rund.

Die steckerförmige Kupplungsstruktur weist in den verschiedenen Stufen jeweils eine spezifische Geometrie auf. Allerdings setzen sich einige geometrische Merkmale über verschiedene Stufen fort, was weiter unten im Detail erläutert wird.

Die Länge der steckerförmigen Kupplungsstruktur, gemessen vom freien Ende bis zum Ansatzpunkt des Nockens, beträgt 20 mmm bis 40 mm, vorzugsweise 27 mm bis 33 mm.

Das Aufstecken bzw. Einfahren eines Aufsteckteils auf die erfindungsgemässe steckerförmige Kupplungsstruktur kann nur in einer Position erfolgen. Mit anderen Worten, ein Aufsteckteil kann nicht falsch bzw. verkehrt herum aufgesteckt werden.

Die Geometrie der ersten Stufe mit vorzugsweise zwei im Wesentlichen runden bzw. kreisförmigen Teilelementen verhindert bereits das falsche bzw. verkehrte Einfahren in ein Aufsteckteil. Die zwei Teilelemente weisen dabei verschiedene Durchmesser auf. Zwischen den beiden Teilelementen ist seitlich jeweils eine Nut angeordnet, so dass ich in der Frontalansicht eine einer 8-förmigen Gestalt ähnliche Gestalt für die erste Stufe ergibt.

Die Durchmessermässige Anordnung der einzelnen Stufen ist im Übrigen vorzugsweise nicht konzentrisch,

Die Anordnung entspricht (näherungsweise) drei Zylindern, die in etwa auf einer Fläche aufliegen. Im Querschnitt betrachtet ergibt sich dabei folgendes Bild:
Der Mittelpunkt der nächstfolgenden Stufe liegt jeweils höher als der Mittelpunkt der vorangegangenen Stufe (gesehen vom freien Ende her, d.h. von Stufe 1 über Stufe 2 zu Stufe 3). Die einzelnen Stufen sind also eher "nach unten" bzw. zur Rückseite des Handteils hin ausgerichtet. Allerdings sind ihre Unterseiten nicht ganz auf einer Linie, es besteht vorzugsweise vielmehr eine minimale Abstufung zwischen den einzelnen Stufen.

Bevorzugt steht die Unterseite der zweiten Stufe dabei etwas über die Unterseite der ersten Stufe hervor und die Unterseite der dritten Stufe steht etwas über die Unterseite der zweiten Stufe hervor.

### Bevorzugte Ausgestaltung erste Stufe

Die erste Stufe befindet sich, wie bereits erwähnt, am freien Ende der steckerartigen Kupplungsstruktur; sie stellt mithin auch die erste Stufe bei einem Einführen in das gegengleiche Aufsteckteil dar.

Die erste Stufe weist vorzugsweise zunächst eine Längsführung in Form von zwei seitlichen Nuten auf, welche die Übergänge zwischen den beiden Teilelementen darstellen, so dass ich in der Frontalansicht eine einer 8-förmigen Gestalt ähnliche Gestalt für die erste Stufe ergibt.

Die beiden Teilelemente weisen vorzugsweise verschiedene Durchmesser auf, wobei vorzugsweise das obere Teilelement der ersten Stufe einen grösseren Durchmesser aufweist als das untere Teilelement. Der Durchmesser der Teilelemente bleibt bevorzugt über die gesamte erste Stufe im Wesentlichen konstant. Wohingegen die Querschnittsfläche bevorzugt vom freien Ende her bis fast zum Ende der ersten Stufe zunimmt (und nur für einen kurzen Übergangsbereich zur zweiten Stufe hin konstant bleibt).

Das obere Teilelement definiert daher, in Längsrichtung gesehen zusammen mit der Einführschräge, eine rampenartige Form (d.h. für sich selbst wie auch für die erste Stufe insgesamt).

Als weitere Komponente der Längsführung ist in der Oberseite des oberen Teilelements (vorzugsweise in dessen hinterer Hälfte, in Längsrichtung gesehen) eine vorzugweise eckige Nut ausgebildet. Aufgrund der rampenartigen Form des oberen Teilelements ist diese Nut nicht überall gleich tief. Die Tiefe nimmt in Richtung der zweiten Stufe zu und bleibt bevorzugt für einen kurzen Übergangsbereich zur zweiten Stufe konstant. Dabei ist der Boden der Nut verglichen mit der Längsachse A_{G} des Handgriffs über die ganze Länge jeweils im gleichen Abstand. Die Tiefenveränderung entsteht durch die Bildung der Einführschräge.

Weiter kann als Komponente der Längsführung auf der Oberseite des oberen Teilelements d.h. auf der rampenartigen Form ein weiteres Stabilisierungselement in Form einer im Wesentlichen rechteckigen Erhöhung integriert sein. Diese kann dem Ausgleich von Toleranzen dienen und die Klemmung im Aufsteckteil verbessern. Die Form ist so gestaltet, dass die Erhöhung in Richtung vom freien Ende weg auslaufend gestaltet ist. Die rechteckige Erhöhung hat eine Breite von 1.5 mm bis 4 mm vorzugsweise von 2 mm bis 3 mm und eine Länge von 3 mm bis 8 mm vorzugsweise von 4 mm bis 5 mm. Die Höhe des Elements beträgt zwischen 0.1 mm und 2 mm vorzugsweise zwischen 0.2 mm und 1 mm.

Auf der Unterseite der ersten Stufe bzw. auf der Unterseite des unteren Teilelements ist eine weitere Nut der Längsführung vorgesehen, welche gleichbleibend zumindest über die gesamte erste Stufe verläuft. Diese untere Nut weist vorzugsweise eine runde Form auf.

Die erste Stufe stellt mithin eine Einführschräge bereit, welche sich bevorzugt aber nicht über die gesamte erste Stufe erstreckt. In einem kurzen Übergangsbereich zur zweiten Stufe ist, wie vorstehend bereits erläutert, eine flache Partie vorgesehen. Auf diese Weise ergibt sich die in der Frontalansicht im Wesentlichen 8-förmige Gestalt der ersten Stufe. Der Querschnitt der ersten Stufe (d.h. in Frontalansicht) ist bevorzugt spiegelbildlich, also auf der linken und der rechten Seite in Längsrichtung des Griffs gespiegelt.

Der Durchmesser des oberen Teilelements beträgt 3 mm bis 6 mm, vorzugsweise von 4 mm bis 5 mm. Der Durchmesser des unteren Teilelements beträgt 2 mm bis 5 mm, vorzugsweise 3 mm bis 4 mm. Der Abstand der Kreismittelpunkte beträgt 2 mm bis 4 mm, vorzugsweise 2,5 mm bis 3 mm.

Die Länge der ersten Stufe beträgt 8 mm bis 20 mm, vorzugsweise 10 mm bis 15 mm. Die Höhe der ersten Stufe - am freien Ende - beträgt 2 mm bis 4 mm, vorzugsweise 2,5 mm bis 3,5 mm, sowie - gegen das Handgriff - 4 mm bis 8 mm, vorzugsweise 5 mm bis 7 mm.

Die Breite der ersten Stufe beträgt - am freien Ende - 2 mm bis 4 mm, vorzugsweise von 2,5 mm bis 3,5 mm, sowie - gegen das Handgriff - 3 mm bis 6 mm, vorzugsweise von 4 mm bis 5 mm.

Zu den geometrischen Elementen, welche sich zwischen der ersten und zweiten Stufe fortsetzen gehört vorzugsweise einmal die Nut auf der Oberseite. Sie dient im Zusammenwirken mit einem Aufsteckteil in erster Linie zur Sicherstellung der korrekten Einführung. Vorzugsweise ist zwischen einem korrespondierenden Kamm des Aufsteckteils und der Nut eine relativ grosse Toleranz vorgesehen.

Auch die Nut auf der Unterseite setzt sich vorzugsweise zwischen der ersten und zweiten Stufe fort. Sie unterstützt die korrekte Führung des Aufsteckteils. Beide sich fortsetzenden Nuten wirken ggf. auch in der Art einer Verdrehsicherung.

### Bevorzugte Ausgestaltung zweite Stufe

Die zweite Stufe der steckerartigen Kupplungsstruktur ist zwischen der ersten und der dritten Stufe angeordnet.

Sie weist vorzugsweise eine im Wesentlichen runde Grundform in Gestalt eines zumindest annähernd geraden Zylinders auf. Sie sorgt in erster Linie für eine Längsführung des entsprechenden Aufsteckteils.

Die zweite Stufe weist eine Nut an ihrer Oberseite auf, welche, wie oben beschrieben, sich von der ersten Stufe her fortgesetzt hat. Die Nut erstreckt sich bevorzugt auch über die volle Länge der zweiten Stufe, d.h. bis zum Übergang der zweiten auf die dritte Stufe. Der Abschluss der Nut bildet eine Art Anschlag. Die Nut weist eine Tiefe zwischen 1 mm und 3,5 mm, vorzugsweise zwischen 2 mm und 3 mm auf. Die Nut korrespondiert mit einem entsprechenden runden Kamm auf der Unterseite des Innenraums des entsprechenden Aufsteckteils.

Die zweite Stufe weist auch auf ihrer Unterseite eine Nut auf, welche sich von der ersten Stufe her fortsetzt. Auch diese Nut erstreckt sich über die volle Länge der zweiten Stufe. Ihre Tiefe beträgt zwischen 0,2 mm und 1,2 mm, vorzugsweise zwischen 0,5 mm und 0,9 mm.

Die zweite Stufe weist vorzugsweise des Weiteren an ihrem äusseren Umfang mehrere flache Ausnehmungen auf, welche insbesondere als Entlüftungselemente fungieren. Sie sollen die Luft im Hohlraum abführen, wenn das Aufsteckteil auf die steckerartige Kupplungsstruktur aufgesteckt wird. Diese flachen Ausnehmungen erstrecken sich bevorzugt ebenfalls über die gesamte Länge der zweiten Stufe.

Vorzugsweise sind zwei umfängliche Ausnehmungen auf der linken und, bevorzugt spiegelbildlich, zwei Ausnehmungen auf der rechten Seite der zweiten Stufe angeordnet. Es können aber auch mehr oder weniger Ausnehmungen in gleichmässiger Beabstandung vorgesehen werden.

Der Breite nach nehmen die Ausnehmungen in Richtung der dritten Stufe vorzugsweise leicht ab, etwa in der Art einer Einlaufschräge.

Zwischen den Ausnehmungen bilden sich entsprechende umfängliche Vorsprünge aus.

Die Tiefe der Ausnehmungen nimmt vorzugsweise ebenfalls in Richtung der dritten Stufe leicht ab.

Die Breite der Ausnehmungen liegt zwischen 1,1 mm und 2,1 mm, vorzugsweise zwischen 1,35 mm und 1,55 mm.

Alle vier Ausnehmungen sind bevorzugt der Länge nach identisch (auslaufend auf den Aussenradius der zweiten Stufe).

Die Tiefe der Ausnehmungen liegt zwischen 0,1 mm und 0,6 mm, vorzugsweise zwischen 0,2 mm und 0,4 mm.

Die Querschnittsform der zweiten Stufe ist allgemein rundlich. Am vorderen bzw. freien Ende der zweiten Stufe beginnt der Querschnitt mit einer Fase, d.h. einer leicht konischen Abschrägung oder einer Abrundung. Die Länge der Fase beträgt vorzugsweise etwa 2 mm.

Die Länge der zweiten Stufe beträgt 2 mm bis 8 mm, vorzugsweise 4 mm bis 6 mm. Der Durchmesser der zweiten Stufe beträgt 5 mm bis 10 mm, vorzugsweise von 6,5 mm bis 8,5 mm.

### Bevorzugte Ausgestaltung dritte Stufe

Die sich an die zweite Stufe anschliessende dritte Stufe der steckerartigen Kupplungsstruktur bildet die hinterste Stufe der Kupplungsstruktur und grenzt schliesslich an den eigentlichen Haltebereich im Handgriff selbst an.

Die dritte Stufe hat im Gegensatz zu den vorher genannten Stufen grundsätzlich keine geometrischen Elemente, die sich von einer vorherigen Stufe fortsetzen.

Die dritte Stufe weist eine generell runde Grundform auf, vorzugsweise in Gestalt eines geraden Zylinders, was wiederum für eine Längsführung sorgt. Die dritte Stufe weist allerdings einen schrägen Abschluss (d.h. mit dem Handgriff) auf. Da der Durchmesser des Handgriffs im Bereich des schrägen Abschlusses der dritten Stufe grösser ist als der Durchmesser der dritten Stufe (bzw. des vorgenannten Zylinders) wird eine schräge Anschlagfläche für ein entsprechendes Aufsteckteil gebildet. Die Anschlagfläche ist in der Seitenansicht als Linie sichtbar.

Auf der Unterseite der dritten Stufe ist vorzugsweise ein Nocken aufgesetzt (d.h. die Höhe des Nockens wird grundsätzlich von der Aussenseite der dritten Stufe und der Aussenseite des Handteils ausserhalb der steckerartigen Kupplungsstruktur bestimmt).

Die Anschlagfläche steht in einem Winkel α von 30° bis 70°, vorzugsweise von 45° bis 55° zur Längsachse des Handgriffs A_{G} beziehungsweise zur Längsachse der steckerartigen Kupplungsstrukur A_{K}. Die dritte Stufe - und mit ihr die gesamte steckerartige Kupplungsstruktur (d.h. der handgriffseitige Teil der Schnittstelle) ist somit auf der Rückseite länger ausgebildet als auf der Vorderseite.

Auch die dritte Stufe weist an ihrer Aussenseite mehrere umfängliche Ausnehmungen (mit entsprechenden umfänglichen Vorsprüngen dazwischen) auf, welche wiederum als Entlüftungselemente (analog jener der zweiten Stufe) fungieren. Vorzugsweise sind wiederum zwei solcher Ausnehmungen (bzw. Vorsprünge) auf der rechten Seite und zwei Ausnehmungen auf der linken Seite der dritten Stufe ausgebildet.

Vorzugsweise sind die Ausnehmungen (bzw. Vorsprünge) dabei spiegelbildlich (und besonders bevorzugt um 90° zueinander verschoben) angeordnet. Bevorzugt sind diese Ausnehmungen (bzw. Vorsprünge) zudem (in Umfangsrichtung) versetzt zu den Ausnehmungen (bzw. Vorsprüngen) der zweiten Stufe angeordnet. Die Ausnehmungen (bzw. Vorsprünge) erstrecken sich jeweils im Wesentlichen über die gesamte Länge der dritten Stufe.

In der Breite nehmen die Ausnehmungen wiederum ab, in der Art einer Einlaufschräge.

Die Tiefe der Ausnehmungen ist ebenfalls abnehmend bzw. in Richtung des Handgriffs auslaufend gestaltet. Die Tiefe beträgt 0,2 mm bis ca. 0,8 mm, vorzugsweise 0,35 mm bis 0,6 mm (im Auslauf, d.h. dicht an der Anschlagfläche ggf. 0 mm).

Die Breite der Ausnehmungen liegt zwischen 1,8 mm und 2,8 mm, vorzugsweise 2 mm bis 2,3mm.

Die Länge der Ausnehmungen ist aufgrund der schrägen Anschlagfläche unterschiedlich. Je zwei Ausnehmungen sind dabei gleich, wobei die unteren beiden länger sind als die oberen beiden.

Die Querschnittsform ist im Wesentlichen rundlich bzw. im Wesentlichen kreisrund.

Die Länge der dritten Stufe beträgt an der Oberseite 2 mm bis 7 mm, vorzugsweise 3 mm bis 5 mm. Die Länge der dritten Stufe an der Unterseite beträgt 8 mm bis 17 mm, vorzugsweise von 10 mm bis 15 mm. Der Durchmesser der dritten Stufe liegt vorzugsweise zwischen 7 mm und 14 mm, vorzugsweise zwischen 9 mm und 11 mm.

Die Ausgestaltung der dritten Stufe ist generell so, dass ein bündiger Abschluss mit der Aussenseite des Aufsteckteils, das heisst zwischen Handgriff und Aufsteckteil, ermöglicht wird. Auf diese Weise wird eine kontinuierliche Oberfläche der Aussenhülle erreicht. Die dritte Stufe dient des Weiteren auch als Auflagefläche zum Aufnehmen von Kräften über die Anschlagfläche.

Der Elektromotor ist vorzugsweise gegenüber der steckerartigen Kupplungsstruktur so positioniert, dass der Exzenter, im Längsschnitt gesehen, in die dritte Stufe hineinragt. Vorzugsweise ragt auch der Elektromotor, jedenfalls teilweise, in den Bereich der dritten Stufe hinein.

Dies ist bedingt durch die schräge Ausgestaltung der dritten Stufe (Rück- bzw. Unterseite mit dem Nocken länger als die Vorder- bzw. Oberseite).

Die Vibrationen werden also vor allem im Bereich des Nockens bzw. der Schnappverbindung mit dem Aufsteckteil erzeugt (d.h. der Exzenter liegt bevorzugt in diesem Bereich).

Durch die Anbringung des Motors im Bereich der Schnittstelle ergeben sich signifikante Vorteile bei der Schwingungsübertragung. Besonders ausgeprägt ergeben sich diese Vorteile dann, wenn die Anschlagfläche des Handgriffs und die, gegenüber der Längsachse des Handgriffs A_{G} geneigte, Rotationsachse A_{M} des Elektromotors einen Winkel ϕ zwischen 35° und 90° vorzugsweise zwischen 50° und 70° einschliessen.

Das Zusammenspiel der vorgenannten geometrischen Elemente auf dem Handgriff mit den korrespondierenden Elementen auf Aufsteckbürste ergibt folgende Vorteile: Es wird eine schräge Anschlagfläche einer geraden Einführkontur und -richtung R gegenübergestellt.

Auf diese Weise kann der auftretende Anpressdruck bzw. die sich aus der Anwendung ergebende Kraft optimal aufgefangen werden. Dies beruht im Wesentlichen darauf, dass die Kontaktfläche (d.h. gegenüber einer "geraden" zylindrischen Struktur) grösser ist. Dies bringt eine bessere Übertragung beziehungsweise einen flächenmässig verteilteren Kontakt mit weniger Druck.

Des Weiteren wird so das Aufsteckteil in der Anwendung auf der Vorderseite (z.B. der Anwendung als Zahnbürsten-Aufsteckteil) in die Schnappung hinein gedrückt, d.h. die Kraft aus der Anwendung schliesst den Verbindungsmechanismus. Dies ergibt eine sichere Verbindung und verhindert ein Lösen bzw. Wegreissen des Aufsteckteils von der Schnappung weg.

Zudem bewirkt eine derart vergrösserte Kontaktfläche zwischen dem Aufsteckteil und dem Handgriff eine deutlich bessere Vibrationsübertragung.

Für die erfindungsgemäss vorgesehene Verdrehsicherung befinden sich zumindest auf der ersten und zweiten Stufe entsprechende Elemente, was ein ungewolltes Verdrehen oder Verkanten praktisch unmöglich macht. Die Elemente der Verdrehsicherung werden weiterhin bevorzugt zumindest teilweise mit Elementen für eine Einführ- bzw. Einfädelhilfe sowie ggf. einer Längsführung kombiniert.

Dabei wirken auch die Übergänge zwischen den Stufen als Verdrehsicherung, da die Querschnitte jeweils nicht konzentrisch angeordnet sind.

Der im Wesentlichen 8-förmige Querschnitt der ersten Stufe (d.h. den beiden Teilelementen mit unterschiedlichem Radius) zusammen mit den Nuten an der Ober- und Unterseite bewirkt, dass ein korrespondierendes Aufsteckteil nur in einer Position aufgesteckt werden kann.

Im Längsschnitt gesehen wird jedenfalls die dritte Stufe der steckerartigen Kupplungsstruktur zumindest teilweise von einer Weichkomponente (z.B. TPE) des Handkörpers überlappt. Der Querschnitt besteht also zumindest zum Teil aus Weichkomponente. Vorzugsweise besteht der Querschnitt jedoch nicht nur aus Weichkomponente, sondern aus einer Kombination aus Hart- und Weichkomponenten.

Die Weichkomponente ist dabei vorzugsweise zumindest auf der Vorderseite des Handgriffs angeordnet. Dies bringt insbesondere bei Kosmetikanwendungen Vorteile, da der Handgriff in diesen Anwendungen nicht identisch wie bei Zahnbürstenanwendung gehalten wird.

In noch weiterer Ausgestaltung der Erfindung ist umfasst:
Aufsteckteil für ein Elektrogerät für die Körperpflege, welches auf einen Handgriff aufbringbar ist, wobei das Aufsteckteil einen Basisbereich und einen Kopfbereich aufweist, welche durch ein Halsbereich verbunden sind, wobei das Aufsteckteil eine buchsenartigen Kupplungsstruktur umfasst, welche zumindest zwei Stufen mit unterschiedlicher Umfangsgeometrie aufweist und welche den aufsteckteilseitigen Teil für eine Schnittstelle mit einer gegengleichen, steckerartigen Kupplungsstruktur eines Handgriffs bildet.

Das erfindungsgemässe Aufsteckteil umfasst also einen Basisbereich und Kopfbereich, welche durch ein Halsbereich verbunden sind. Bevorzugt umfassen der Basisbereich und ggf. ein Teil des Halsbereichs dabei die buchsenartige Kupplungsstruktur, also den aufsteckteilseitigen Teil der Schnittstelle.

Diese ist für alle Anwendungsfälle bzw. Ausführungsformen der erfindungsgemässen Aufsteckteile gleich ausgebildet (d.h. im Wesentlichen gegengleich zur steckerartigen Kupplungsstruktur des Handgriffs).

Die buchsenartige Kupplungsstruktur ist an der Innenseite der Aufsteckteile ausgebildet und vorzugsweise in drei Stufen unterteilt, nämlich eine erste Stufe (das Pendant zur dritten Stufe des Handgriffs), eine zweite Stufe (das Pendant zur zweiten Stufe des Handgriffs) sowie eine dritte Stufe (das Pendant zur ersten Stufe des Handgriffs). Von der schrägen Anschlagfläche des Aufsteckteils ausgehend wird vorzugsweise die Ausnehmung für den Nocken des Handgriffs ausgebildet.

Die erste Stufe umfasst bevorzugt umfängliche Aussparungen sowie umfängliche Vorsprünge. Die Aussparungen und Vorsprünge sind vorzugsweise symmetrisch zueinander ausgebildet, wobei die Vorsprünge der ersten Stufe des Aufsteckteils bevorzugt mit den entsprechenden umfänglichen Vorsprüngen der dritten Stufe des Handgriffs in Anlage gelangen. Demgemäss liegen die entsprechenden Aussparungen des Aufsteckteils mit den Aussparungen des Handteils ebenfalls direkt beieinander und bilden zwischen sich einen Hohlraum.

Insoweit ist bei der ersten Stufe der buchsenartigen Kupplungsstruktur und der dritten Stufe der steckerartigen Kupplungsstruktur keine (vollständige) Gegengleichheit gegeben.

Gleiches gilt auch im Hinblick auf die zweite Stufe der buchsenartigen Kupplungsstruktur, welche wiederum vorzugsweise umfängliche Aussparungen sowie umfängliche Vorsprünge aufweist, wobei die umfänglichen Vorsprünge dieser zweiten Stufe bevorzugt in Anlage gelangen mit den umfänglichen Vorsprüngen der zweiten Stufe der steckerartigen Kupplungsstruktur des Handgriffs. Demgemäss liegen auch hier die entsprechenden Aussparungen des Aufsteckteils mit den Aussparungen des Handteils ebenfalls direkt beieinander und bilden zwischen sich einen Hohlraum.

Die zwischen den Aussparungen gebildeten Hohlräume dienen dazu, die Luft abzuleiten, wenn das Aufsteckteil auf das Handteil bzw. die buchsenartige Kupplungsstruktur auf die steckerartige Kupplungsstruktur aufgebracht wird.

Die zweite Stufe der buchsenartigen Kupplungsstruktur weist vorzugsweise an der Oberseite einen eckigen Kamm auf, welcher bevorzugt in seiner Ausgestaltung mit der eckigen Nut der steckerartigen Kupplungsstruktur korrespondiert. Der eckige Kamm setzt sich bevorzugt von der zweiten Stufe bis zur dritten Stufe der buchsenartigen Kupplungsstruktur fort, so dass er vollständig in Eingriff mit der eckigen Nut gelangt.

Auf der Unterseite der zweiten Stufe der buchsenartigen Kupplungsstruktur ist vorzugsweise ein runder Kamm angeordnet, welcher bevorzugt mit der runden Nut an der Unterseite des unteren Teilelements der ersten und zweiten Stufe der steckerartigen Kupplungsstruktur korrespondiert. Auch der runde Kamm setzt sich bevorzugt über die dritte Stufe der buchsenartigen Kupplungsstruktur hinweg fort.

Der runde Kamm dient einerseits ebenfalls als Führungsstruktur, weiter kann dieser aber auch einen technischen Einfluss haben. Durch den runden Kamm wird nämlich bei dünnwandigen Teilen oder bei relativ dünnwandigen Teilen, wie beispielsweise bei Austeckteilen, eine grössere Festigkeit erreicht.

Die dritte Stufe der buchsenartigen Kupplungsstruktur weist vorzugsweise eine achtförmige Öffnung auf, an deren Seiten bevorzugt jeweils eine spitz zulaufende Rippe ausgebildet ist. Die spitz zulaufenden Rippen korrespondieren bevorzugt mit den beiden Nuten zwischen dem oberen Teilelement und dem unteren Teilelement der ersten Stufe der steckerartigen Kupplungsstruktur bzw. gelangen mit diesen in Eingriff.

Die Kupplungsstruktur kann auch Kupplungselemente oder Zonen aus Weichmaterial enthalten. Diese können einen gewissen Vorspann innerhalb der Kupplung bewirken. Das Weichmaterial kann aufsteckteil- und/oder handteilseitig vorgesehen sein.

Der Halsbereich des erfindungsgemässen Aufsteckteils kann je nach Art der Anwendung unterschiedlich ausgestaltet sein (d.h. etwa hinsichtlich der Länge, des Winkels etc.) - nicht aber hinsichtlich des Schnittstellenteils.

Die Längsachse des Aufsteckteils A_{A} bezeichnet die Längsachse der buchsenartigen Kupplungsstruktur. Diese Längsachse liegt im Basisbereich des Aufsteckteils. Die Längsachse des Kopfbereichs A_{B} liegt entsprechend im Kopfbereich. Der zwischen A_{A} und A_{B} liegende Winkel wird mit Δ bezeichnet.

Der Winkel Δ beträgt in der Regel zwischen 10° und 30°, besonders bevorzugt zwischen 15° und 25°.

Der Kopfbereich des erfindungsgemässen Aufsteckteils ist grundsätzlich für jede Anwendungsart unterschiedlich gestaltet.

Das Aufsteckteil kann ebenfalls über Zonen aus Weichmaterial verfügen. Diese Zonen können die Haptik vereinfachen, Vibrationen dämpfen oder Anzeigen wo das Aufsteckteil gehalten wird (zum Beispiel zum Aufstecken oder Entfernen vom Handteil).

Die Toleranzen des erfindungsgemässen Aufsteckteils (d.h. insbesondere des Basisbereichs) gegenüber dem Handgriff liegen zwischen 0 mm und 0,4 mm, vorzugsweise zwischen 0, 15 mm und 0,25 mm.

Das Aufsteckteil weist zumindest für gewisse Körperpflegeanwendungen bevorzugt Griffmulden auf, welche zur Verbesserung des Halts dienen. Diese Griffmulden können über Zonen aus Weichmaterial verfügen.

Die Griffmulden können auf einer auf oder mehreren Seiten ausgebildet sein (z.B. immer gegenüberliegend am Aufsteckteil; immer gegenüberliegend einem Funktionselement bzw. der Anwendungsseite), jeweils abhängig von der Position/Anordnung der Funktionselemente des Kopfbereichs.

Die Griffmulden sind vorzugsweise als Vertiefungen mit rundlicher bzw. ovaler Form ausgebildet (Fingermulden). Weiter vorzugsweise sind die Griffmulden auch mit einer Struktur versehen (z.B. mit Noppen oder Lamellen), welche aus Hart- und/oder Weichkomponente bestehen kann. Insgesamt kann die Griffmulde mitsamt ihrer Struktur aus Hart- und/oder Weichkomponente bestehen.

Des Weiteren ist es möglich auf die eigentliche Mulde zu verzichten und nur eine Struktur zu realisieren, welche den Halt verbessert. Die Struktur kann beispielsweise Noppen, Lamellen, etc. als Grundelement enthalten. Die Form/der Querschnitt des Grundelements kann rund, oval, generell n-eckig, bananenförmig, etc. sein. Die Höhe des einzelnen Elements beträgt zwischen 0.2 mm und 2 mm vorzugsweise zwischen 0.5 mm bis 1.5 mm.

In der Struktur können mehrere Grundelemente integriert sein. Diese können gleichartig oder unterschiedlich sein. Die Anordnung kann regelmässig oder unregelmässig sein.

Auf einem Aufsteckteil können mehrere voneinander getrennte Flächen mit Strukturen besetzt sein d.h. es können beispielsweise verschiedene Griffpositionen realisiert werden. Eine einzelne solche Fläche hat eine Breite von 4 mm bis 12 mm vorzugsweise von 6 mm bis 10 mm, bei einer Länge von 5 mm bis 35 mm vorzugsweise 8 mm bis 22 mm.

Anwendungsbeispiele für die Griffmulden wären beispielsweise im Kosmetik- oder Haarentfernungsbereich, wo das Gerät genauer geführt werden muss, oder aber der Bereich Mundhygiene Interdentalreinigung, wo ebenfalls eine genaue Führung notwendig ist. Generell sind die Griffmulden immer dann sinnvoll, wenn das Gerät wie ein Stift gehalten werden soll oder wenn es besonders genau gehalten bzw. manövriert werden soll.

### Bevorzugte Ausführungsformen Aufsteckteile

### Aufsteckbürsten (bzw. Aufsteck-Zahnbürsten)

Aufsteckbürsten kommen insbesondere bei der Zahnreinigung zum Einsatz.

Da jedenfalls der Basisbereich (mit der buchsenartigen Kupplungsstruktur), wie oben beschrieben, für alle Ausführungsformen gleich ist, wird er an dieser Stelle nicht noch einmal beschrieben.

Der Kopfbereich und der Halsbereich können bei der Aufsteckbürsten-Anwendung auf unterschiedlichste Weise ausgestaltet sein; es können insbesondere verschiedene Winkelstellungen des Bürstenkopfes sowie verschiedene Bürstenköpfe an sich realisiert werden.

Im Kopfbereich können vorzugsweise auch Schutzelemente vorgesehen sein. Bei einem Zwei-Komponenten-Aufsteckteil sind diese beispielsweise aus Weichkomponente gebildet und umgeben zumindest teilweise den Bürstenkopf, um ein Anschlagen des Aufsteckteils im Mund zu dämpfen.

Hinsichtlich des Halsbereichs werden vorzugsweise der Winkel gegenüber der Längsachse des Aufsteckteils bzw. Längsachse des Bürstenkopfs welche dieser entspricht, der Querschnitt des Halsbereichs sowie die Länge des Halsbereichs, d.h. der Abstand des Bürstenkopfs zum Handgriff, variabel ausgestaltet.

Der Bürstenkopf kann mittels verschiedener Beborstungsverfahren (siehe oben) für verschiedene Anforderungen variabel gestaltet werden. Auch bezüglich der Borstenanordnung im Borstenfeld, den Borsten selbst und der Kopfgrösse bestehen verschiedenste Variationsmöglichkeiten. Als Zusatzteil kann im Übrigen ein Kopfköcher zum Schutz vor Verunreinigungen bei der Aufbewahrung z.B. im Beauty Case vorgesehen sein. Dies gilt im Übrigen für sämtliche Ausführungsformen von Aufsteckteilen.

Weiter ist es möglich die Rückseite des Kopfteils ist es möglich Zungenreinigungselemente zu gestalten, beispielsweise in Form von Noppen oder Lamellenstrukturen. Mit diesen kann während der Zahnreinigung bzw. im Anschluss die Zunge ebenfalls gereinigt werden.

Die Länge der Aufsteckbürsten beträgt generell zwischen 50 mm und 100 mm, bevorzugt zwischen 60 mm und 90 mm und noch weiter bevorzugt zwischen 70 mm und 80 mm.

Für die Realisierung des erfindungsgemässen Elektrogeräts bzw. des erfindungsgemässen Handgriffs und der erfindungsgemässen Aufsteckteile können verschiedene Kunststoffe eingesetzt werden.
Beispielhafte Möglichkeiten aus dem Bereich der Thermoplaste umfassen folgende Hartkomponenten: Styrolpolymerisate wie Styrolacrylnitril (SAN), Polystyrol (PS), Acrylnitrilbutadienstyrol (ABS), Styrolmethylmethacrylate (SMMA) oder Styrolbutadien (SB) ;
Polyolefine wie Polypropylen (PP) oder Polyethylen (PE), insbesondere auch in Form von High Density Polythylen (HDPE) oder Low Density Polyethylen (LDPE); Polyester wie Polyethylenterephthalat (PET) in Form von säuremodifiziertem Polyethylenterephthalat (PETA) oder glykolmodifiziertem Polybutylenterephthalat (PETG), Polybutylenterephtalat (PBT), säuremodifiziertem Polycyclohexylendimethylenterephthalat (PCT-A) oder glykolmodifiziertem Polycyclohexylendimethylenterephthalat (PCT-G);
Cellulosederivate wie Celluloseacetat (CA), Celluloseacetobutyrat (CAB), Cellulosepropionat (CP), Celluloseacetatphthalat (CAP) oder Cellulosebutyrat (CB) ;
Polyamide (PA) wie PA 6.6, PA 6.10 oder PA 6.12; Polymethymethacrylat (PMMA); Polycarbonat (PC); Polyoxymethylen (POM); Polyvinylchlorid (PVC); Polyurethan (PUR).

Beispielhafte Möglichkeiten aus dem Bereich der Thermoplastischen Elastomere (TPE`s) umfassen folgende Weichkomponenten:
Thermoplastische Polyurethan-Elastomere (TPE-U);
Thermoplastische Styrol-Elastomere (TPE-S) wie etwa Styrol-Ethylen-Butylen-Styrol-Copolymer (SEBS) oder Styrol-Butadien-Styrol-Copolymer (SBS);
Thermoplastische Polyamid-Elastomere (TPE-A);
Thermoplastische Polyolefin-Elastomere (TPE-O);
Thermoplastische Polyester-Elastomere (TPE-E).

Des Weiteren können die vorgenannten Thermoplaste Polyethylen (PE) und Polyurethan (PU) sowohl als Hartkomponente als auch als Weichkomponente eingesetzt werden.

Besonders geeignet als Hartkomponente ist PP. Bevorzugt wird PP mit einem Elastizitäts-Modul von 1000 - 2400 N/mm², weiter vorzugsweise mit einem Elastizitäts-Modul von 1300 - 1800 N/mm².

Als Weichkomponente wird bevorzugt ein TPE-S eingesetzt. Die Shore A Härten der Weichkomponente liegen vorzugsweise unterhalb von 90 Shore A. Die Weichkomponenten bilden mit der Hartkomponente mittels überspritzen im Zwei- oder Mehrkomponentenspritzgussverfahren einen Materialschluss.

Beispielmaterialien für die Herstellung von gespritzten Borsten umfassen:
Polyamid Elastomer (z.B. Grilflex ELG 5930 von Ems-Chemie AG); Polyester Elastomer (z.B. Riteflex 672 RH Nat oder Riteflex RKX 193 RF Nat von Ticona Polymers oder Hytrel 7248 von DuPont. Die Borstenmaterialien für die gespritzten Borsten haben eine Shore A Härte von 0 bis 100, vorzugsweise von 30 bis 80 Shore A.

Konventionelle Borsten (zugespitzt oder zylindrisch) sind vorliegend vorzugsweise aus Polyamid (PA) oder Polyester (PBT) hergestellt.

Gummielastische Massage- und Reinigungselemente sind vorliegend aus einer Weichkomponente hergestellt.

Auch Biokunststoffe, d.h. Kunststoffe die aus nachwachsenden Rohstoffen hergestellt sind, sind grundsätzlich einsetzbar.

Eine besonders bevorzugte Hartkomponente für die erfindungsgemässen Aufsteckteile ist PP Tipplen R359 von TVK Plc. (Tipplen ist ein Markenzeichen TVK Plc.). Eine besonders bevorzugte Hartkomponente für den erfindungsgemässen Handgriff ist Total PPH 5042 von Total SA (Total ist ein Markenzeichen von Total SA) oder alternativ Moplen HP548L von LyondellBasell Industries Holdings B.V. (Moplen ist ein Markenzeichen von LyondellBasell Industries Holdings B.V.).

Anhand der beiliegenden Figuren sollen beispielhaft und lediglich zum Zwecke der Veranschaulichung mögliche Ausführungsformen der vorliegenden Erfindung dargestellt werden. Die einzelnen Ausführungsformen können ganz oder in Teilen mit anderen Ausführungsformen der Erfindung kombiniert werden, ohne den Rahmen der Erfindung zu verlassen. Ebenso kann die nachfolgende Beschreibung zu den einzelnen Figuren auf andere Figuren übertragen werden, die gleiche oder ähnliche Ausführungsformen zeigen und ggf. weniger detailliert beschrieben sind.

Es zeigt:
- Fig. 1a: eine perspektivische Ansicht einer ersten Ausführungsform einer Zahnbürste;
- Fig. 1b: eine Seitenansicht der Zahnbürste gemäss Fig. 1a;
- Fig. 1c: eine Draufsicht auf die Zahnbürste gemäss Fig. 1a;
- Fig. 1d: eine Unteransicht der Zahnbürste gemäss Fig. 1a;
Fig. 1e eine Querschnittsansicht der Zahnbürste gemäss Fig. 1a;
Fig. 1f eine Querschnittsansicht einer Zahnbürste;
Fig. 2a eine perspektivische Ansicht eines Handgriffs;
Fig. 2b eine perspektivische Ansicht des um 180° gedrehten Handgriffs gemäss Fig. 2a;
Fig. 2c eine Seitenansicht des Handgriffs gemäss Fig. 2a;
Fig. 2d eine Draufsicht auf den Handgriff gemäss Fig. 2a;
Fig. 2e eine Unteransicht des Handgriffs gemäss Fig. 2a;
Fig. 2f eine Querschnittsansicht des Handgriffs gemäss Fig. 2a (entsprechend der in Fig. 1e dargestellten Ausführungsform);
Fig. 3a eine perspektivische Ansicht eines Aufsteckteils;
Fig. 3b eine Seitenansicht des Aufsteckteils gemäss Fig. 3a;
Fig. 3c eine Draufsicht auf das Aufsteckteil gemäss Fig. 3a;
Fig. 3d eine Unteransicht auf das Aufsteckteil gemäss Fig. 3a;
Fig. 3e eine Hinteransicht des Aufsteckteils gemäss Fig. 3a;
Fig. 4 eine Seitenansicht eines Aufsteckteils;
Fig. 5 eine Seitenansicht eines Aufsteckteils;
Fig. 6 eine Seitenansicht eines Aufsteckteils;

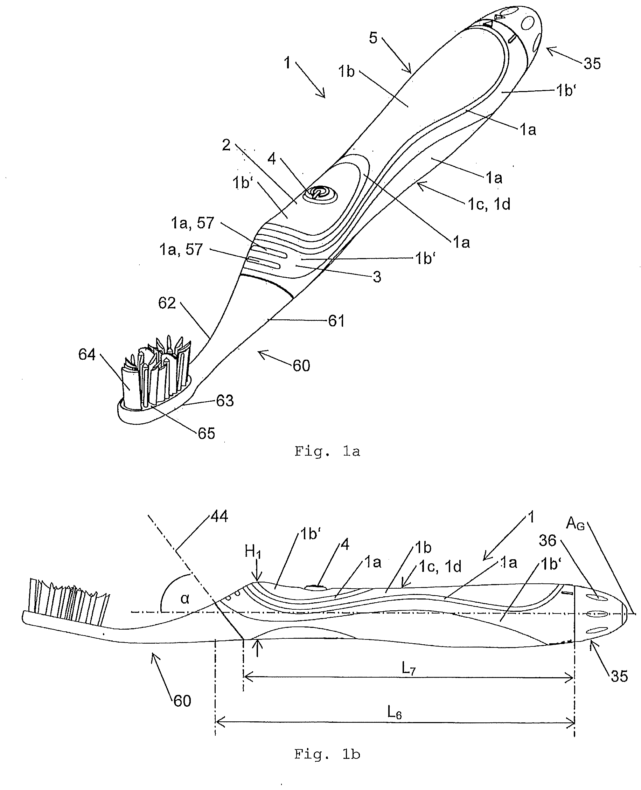

In der **Fig. 1a** wird eine perspektivische Ansicht einer Elektrozahnbürste, wiedergegeben.

Die Elektrozahnbürste setzt sich im Wesentlichen aus dem Handgriff 1 bestehend aus Handteil 1c und dem Verschlussdeckel 35 sowie dem Aufsteckteil 60 zusammen. Das Handteil 1c besteht im Wesentlichen aus dem Grundkörper 5, welcher zumindest eine Hartkomponente 1a umfasst, sowie dem Umspritzkörper, der eine oder mehrere Weichkomponenten 1b, 1b' umfasst, und dem Innenleben.

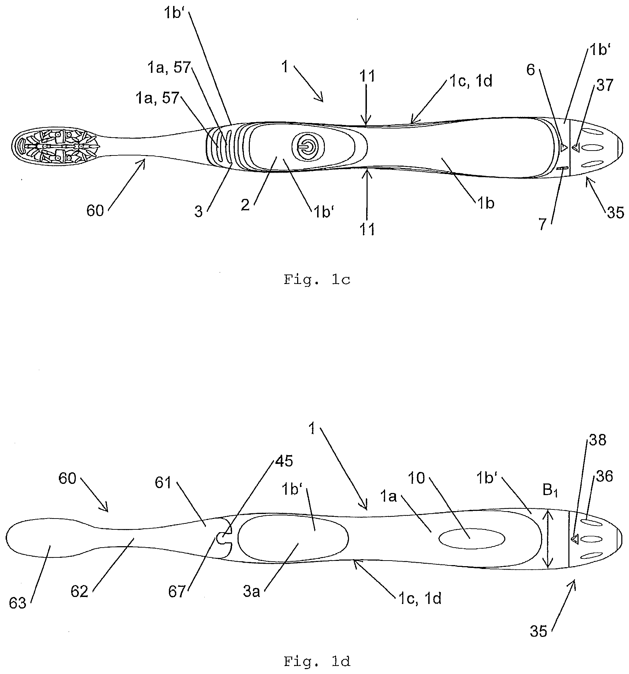

Vorliegend sind insbesondere die Schalterpartie 2, Teile der Frontpartie 3 sowie die Rückenpartie 3a (vgl. **Fig. 1d**) aus einer Weichkomponente 1b' gebildet. Weiter ist auf der Vorderseite eine Partie aus Weichkomponente 1b gestaltet. Dabei kann es sich jeweils um dieselbe Weichkomponente handeln, es können aber auch je nach Bedarf, unterschiedliche Weichkomponenten verwendet werden. Bezüglich der in Frage kommenden Materialien wird jeweils auf die allgemeine Beschreibung oben verwiesen.

Im Bereich der Schalterpartie 2 ist auch das Ein-/Ausschalter-Symbol 4 für die Elektrozahnbürste angeordnet. Das Ein-/Ausschalter-Symbol 4 steht für jene Stelle die gedrückt werden muss, um den Schalter 24 im Innern des Handteils zu betätigen. Die Frontpartie 3 umfasst zwei oder mehrere Stege 57, welche aus der Hartkomponente 1a gebildet sind und welche zusammen mit der umgebenden Weichkomponente 1b' der Frontpartie 3 eine besonders gute Griffigkeit ergeben. An die Frontpartie 3 schliesst sich das Aufsteckteil 60 an, hier in Form eines Zahnbürsten-Aufsteckteils.

Das Aufsteckteil umfasst einen Basisbereich 61, mit welchem es an den Grundkörper 5 aus der Hartkomponente 1a des Handgriffs 1 bzw. an die steckerartige Kupplungsstruktur 40 des Handgriffs 1 anschliesst, sowie einen Kopfbereich 63 und einen den Basisbereich 61 mit dem Kopfbereich 63 verbindenden Halsbereich 62.

Im vorliegenden Fall ist im Kopfbereich 63 ein Trägerplättchen 65 montiert, mit darauf angeordneten Reinigungselementen 64. Bei den Reinigungselementen 64 kann es sich um Borsten bzw. Borstenbündel und/oder weichelastischen Reinigungs- und Massageelemente (diese werden vorzugsweise aus einer Weichkomponente gebildet bzw. gespritzt) handeln. Die Borsten bzw. Borstenbündel werden vorzugsweise im AFT-Verfahren (Anchor-Free Tufting) aufgebracht.

Die **Fig. 1b** stellt eine Seitenansicht der Elektrozahnbürste gemäss **Fig. 1a** dar. Die Längsachse des Handgriffs 1 wird vorliegend mit A_{G} bezeichnet. Der Übergangsbereich zwischen dem Handgriff 1 und dem Aufsteckteil 60 umfasst eine schräggestellte Anschlagfläche 44, welche mit der Längsachse A_{G} des Handgriffs einen Winkel α einschliesst. Dieser ist in der vorliegenden Darstellung aufgrund des Winkels als Linie sichtbar.

Die Länge von der Anschlagfläche 44 bis zum Griffende (auf der Vorder- bzw. Oberseite des Handteils 1c ohne Verschlussdeckel 35) wird mit L₆ bezeichnet und die Länge von der Anschlagfläche 44 bis zum Griffende (auf der Rück- bzw. Unterseite des Handteils 1c ohne Verschlussdeckel 35) mit L₇, wobei stets L₆ > L₇ gilt.

Der Verschlussdeckel 35 weist an seinem hinteren Ende Einkerbungen 36 auf, welche dazu dienen, dass der Benutzer beim Verdrehen des Verschlussdeckels 35 mit den Fingern nicht so leicht abrutscht. An seiner höchsten Stelle, im Bereich der Frontpartie 3, weist der Handgriff 1 eine maximale Höhe H₁ auf. Im Bereich der Schalterpartie 2 erkennt man wiederum das Ein-/Ausschalter-Symbol 4.

Die **Fig. 1c** stellt eine Draufsicht auf die Elektrozahnbürste gemäss **Fig. 1a** dar. Man erkennt wiederum das Aufsteckteil 60, den Handteil 1c sowie den Verschlussdeckel 35.

Im Übergangsbereich von dem Handteil 1c zu dem Verschlussdeckel 35 sind auf Seiten des Handteils 1c die Markierungen 6 und 7 angebracht sowie auf der Seite des Verschlussdeckels 35 die Markierung 37. Die beiden dreieckigen Markierungen 6 und 37 liegen sich dabei direkt gegenüber, was vorliegend bedeutet, dass die entsprechenden Kontaktbleche des Handteils 1c und des Verschlussdeckels 35 in Kontakt stehen, was weiter unten detaillierter erläutert wird.

Wird der Verschlussdeckel 35 so verdreht, dass sich die Markierungen 7 (auf Seite des Handteils 1c) und 37 (auf Seite des Verschlussdeckels) gegenüber liegen, dann bedeutet dies vorliegend, dass die entsprechenden Kontaktbleche des Handteils 1c sowie des Verschlussdeckels 35 nicht in Kontakt stehen.

Des Weiteren erkennt man, dass die Oberseite des Handgriffs 1 überwiegend aus der Weichkomponente 1b gebildet wird und auch im Bereich der Schalterpartie 2 sowie im Bereich der Frontpartie 3 eine Weichkomponente 1b' aufweist. Die Weichkomponente 1b' der Frontpartie 3 verläuft dabei bis zum Griffende und die Markierungen 6 und 7 sind im Bereich dieser Weichkomponente 1b' aufgebracht. Die Stege 57 sind aus der Hartkomponente 1a gebildet.

Etwa in der Mitte des Handgriffs 1 weist dieser eine Taillierung 11 auf, welche wiederum die Griffigkeit der Elektrozahnbürste verbessert (d.h. die Ergonomie ist optimiert und die Zahnbürste liegt so besser in der Hand) .

In **Fig. 1d** wird eine Unteransicht der Elektrozahnbürste nach Fig. 1a wiedergegeben. Man erkennt, dass der Verschlussdeckel 35 auch auf der Rückseite eine dreieckförmige Markierung 38 aufweist. Auf der Rückseite des Verschlussdeckels 35 sind ebenfalls Einkerbungen 36 vorhanden. Der Verschlussdeckel 35 ist spiegelsymmetrisch aufgebaut und da er in zwei Positionen auf den Handgriff 1c aufgebracht werden kann, sind einerseits die dreieckförmige Markierung 38 und andererseits die Einkerbungen 36 (welche rund um den Verschlussdeckel 35 angeordnet sind) auch auf der Rückseite sichtbar.

Das Handteil 1c weist auf seiner Rückseite eine Flachstelle 10 auf, welche zur stabilen Ablage des Handteils 1c bzw. der Elektrozahnbürste dient. Hinter der Flachstelle 10, d.h. in Richtung des Verschlussdeckels 35, weist das Handteil 1c seine maximale Breite B₁ auf. Die Rückseite des Handteils 1c wird überwiegend aus der Hartkomponente 1a gebildet, allerdings sind auch auf der Rückseite mit Weichkomponente 1b' versehene Bereiche, nämlich die Rückenpartie 3a und der Abschluss des Handteils 1c, vorgesehen.

Die Weichkomponente 1b' dient wiederum einer verbesserten Griffigkeit der Elektrozahnbürste, indem etwa der Zeigefinger beim Halten des Handgriffs 1 nicht so leicht abrutscht.

Im Bereich des Übergangs vom Handgriff 1 zum Basisbereich 61 des Aufsteckteils 60 befindet sich auf Seiten des Handgriffs 1 ein Nocken 45, welcher mit einer korrespondierenden Ausnehmung 67 auf der Seite des Aufsteckteils 60 verrastet ist. Mit diesen beiden Elementen (Nocken 45 und Ausnehmung 67) kann das Abzugsgewicht für die Aufsteckbürste in sicherheitsrelevanter Hinsicht erhöht bzw. eingestellt werden. Je nach Toleranz zwischen den beiden Elementen und zugehöriger Materialwahl stellt sich das Abzugsgewicht ein.

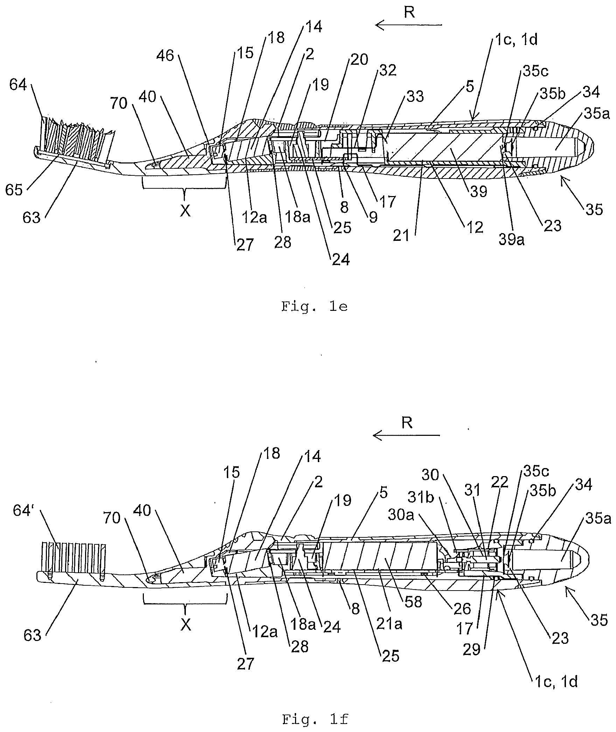

Die **Fig. 1e** zeigt eine Querschnittsansicht der Elektrozahnbürste gemäss **Fig. 1a****.** Hierbei handelt es sich um die Batterieversion. Im Innenraum des Grundkörpers 5 bzw. des Handkörpers 1d ist ein Trägerelement 12 angeordnet, auf bzw. an dem alle wesentlichen Komponenten des Elektroantriebs angeordnet sind.

Der Verschlussdeckel 35 der Elektrozahnbürste ist auf das Handteil 1c aufgebracht. Der Verschlussdeckel 35 weist einen Deckelhohlraum 35a auf, in welchen der Batteriepol 39a der Batterie 39 hineinragt. Zum Kontaktieren des Batteriepols 39a weist der Verschlussdeckel ein Kontaktblech 35b mit einem Federblechelement 35c. Das Kontaktblech 35b liegt quer zum Deckelhohlraum 35a und verschliesst diesen mindestens teilweise. Das Kontaktblech 35b ist seitlich des Deckelhohlraums 35a in der entsprechenden Seitenwand in einer Ausnehmung und in der anschliessenden Seitenwand gehalten. Das Kontaktblech 35b schneidet zum Halten in die Seitenwand ein, sodass ein Reibschluss entsteht. Das Federblechelement 35c des Kontaktblechs 35b ist in Richtung Batterie 39 gerichtet und kontaktiert so den Batteriepol 39a.

Das Kontaktblech 35b stellt im Weiteren den Kontakt mit dem Trägerelement-Kontaktblech 17 her, damit der Stromkreis geschlossen wird.

Auf der Aussenseite des Verschlussdeckels 35 ist ein Dichtungsring 34 angeordnet, welcher den Innenraum des Handgriffs gegen Spritzwasser etc. abdichten hilft. Der Bereich des Trägerelements 12, welcher am hinteren Ende des Handgriffs mit dem vorderen Bereich des Verschlussdeckels 35 überlappt, wird als Anschlusskompartiment 23 bezeichnet.

In Einführrichtung R nach dem Anschlusskompartiment 23 ist das Batteriekompartiment 21 des Trägerelements 12 angeordnet, in welches eine Batterie 39 eingesetzt ist. Der vordere Pol der Batterie 39 berührt die Kontaktzunge 33 des entsprechenden Batterie-Kontaktblechs 32. Das Batterie-Kontaktblech 32 ist im Kontaktblechkompartiment 20 des Trägerelements 12 angeordnet, welches sich in Einführrichtung R direkt nach dem Batteriekompartiment 21 befindet. Das Batterie-Kontaktblech 32 ist des Weiteren mit der Printplatte 25 verbunden.

Innerhalb des Kontaktblechkompartiments 20 ist auch das Trägerelement-Kontaktblech 17, mindestens teilweise, angeordnet, welches ebenfalls mit der Printplatte 25 verbunden ist, wobei das Trägerelement-Kontaktblech 17 dann weiter entlang der unteren Aussenseite des Trägerelements 12 entlang des Batteriekompartiments 21 verläuft und auf der Aussenseite des Anschlusskompartiments 23 halbkreisförmig entlang dem Aussenumfang des Trägerelements 12 bzw. des Anschlusskompartiments 23, radial, weiter geführt wird, wo es in Öffnungen in der Aussenseite des Anschlusskompartiments hineinragt, um in der Art eines an sich bekannten Bajonettverschlusses mit dem Kontaktblech 35b des Verschlussdeckels 35 zusammen zu wirken (hier nicht dargestellt).

In Einführrichtung R nach dem Kontaktblechkompartiment 20 ist das Schalterkompartiment 19 vorgesehen, in welchem der Schalter 24 angeordnet ist, der durch Drücken des Ein-/Ausschalter-Symbols 4 der Schalterpartie 2 bedient wird. Der Schalter 24 ist direkt auf die Printplatte 25 aufgebracht.

In Einführrichtung R nach dem Schalterkompartiment 19 ist eine Kabeldurchführung 18a für die Kabel vorgesehen, welche von der Rückseite des Elektromotors 14 zur Unterseite der Printplatte verlaufen und dort entsprechend verlötet sind (die Kabel sind in der Darstellung nicht zu erkennen).

Der Elektromotor 14 ist schliesslich im Motorkompartiment 18 des Trägerelements 12 angeordnet, und zwar mit einer Schrägstellung, welche durch die Schräge 12a des Trägerelements 12 definiert wird, auf welcher die Unterseite des Elektromotors 14 aufliegt. Mit seiner Vorderseite bzw. Vorderkante liegt der Elektromotor 14 an einem vorderen Motoranschlag 27 des Trägerelements 12 an, mit seiner Hinterseite liegt der Elektromotor 14 am hinteren Motoranschlag 28 des Trägerelements 12 an.

Der auf der Rotationsachse A_{M} des Elektromotors 14 angeordnete Exzenter 15 ragt über den vorderen Motoranschlag 27 hinaus und in den Basisbereich 46 der steckerartigen Kupplungsstruktur 40 hinein. Diese Anordnung hat sich als besonders effizient für die Vibrationsübertragung erwiesen.

Man erkennt in der vorliegenden Querschnittsansicht auch, wie die steckerartige Kupplungsstruktur 40 des Handgriffs und die gegengleich ausgebildete, buchsenartige Kupplungsstruktur 70 des Aufsteckteils 60 die Schnittstelle X zwischen dem Handgriff 1 und dem Aufsteckteil 60 bilden.

Im Kopfbereich 63 des Aufsteckteils 60 ist das Trägerplättchen 65 zu erkennen, auf welchem die Reinigungselemente 64 angeordnet sind.

Bezüglich der konkreten Abmessungen, Materialien und sonstigen Ausgestaltungen wird auch auf die obige allgemeine Beschreibung zur Batterieversion verwiesen. In der **Fig. 1f** wird nun eine Querschnittsansicht einer Elektrozahnbürste dargestellt, nämlich die Akkuversion. Auch hier ist wiederum der Verschlussdeckel 35 auf das hintere Ende des Handteils 1c aufgebracht. Das Kontaktelement 31 der Buchse 30 ragt dabei in den Deckelhohlraum 35a des Verschlussdeckels 35 hinein und zwar wiederum im Bereich des Anschlusskompartiments 23, welches im Bereich der Überlappung zwischen Trägerelement 12 und dem vorderen Ende des Verschlussdeckels 35 gebildet ist.

Auf der Aussenseite des Verschlussdeckels 35 ist wiederum ein Dichtungsring 34 angeordnet, welcher den Innenraum des Handgriffs 1 vor Spritzwasser etc. schützen hilft. Die Buchse 30 ist fest im Buchsenkompartiment 22 des Trägerelements 12 angeordnet, welches die Buchse 30 grösstenteils umfänglich umschliesst. Das Buchsenkompartiment 22 weist im Übrigen einen vorderen Anschlag 31b für die Buchse 30 auf, wobei die Buchse 30 mit ihrer Hinterseite daran anschlägt. Der in Einführrichtung R vordere Anschlag der Buchse 30 wird mit 31b bezeichnet.

Am Trägerelement 12 über dem Trägerelement-Kontaktblech 17 ist weiter eine Dichtung 29 (d.h. ein Dichtring) angebracht, welche eine weitere Abdichtung des Innenraums gegen Spritzwasser bringt. Des Weiteren dämpft diese Dichtung 29 auch unerwünschte Schwingungen.

Am in Einführrichtung R vorderen Ende der Buchse 30 (der eigentlichen Hinterseite der Buchse 30) befinden sich zwei Buchsenanschlüsse 30a, welche über (nicht dargestellte) Kabel mit der Printplatte 25 verbunden sind. Der Akku 58 ist fest auf der Printplatte 25 montiert bzw. angelötet und ist so auf dem Trägerelement 12 montiert und liegt mindestens teilweise direkt an diesem an. An der Unterseite des Trägerelements 12 sind mehrere Rastnasen 26 vorgesehen, mit denen die Printplatte am Trägerelement 12 gehalten wird.

Im Anschluss an das Akkukompartiment 21a folgt wiederum das Schalterkompartiment 19. Der Schalter 24 ist auch hier direkt auf der Printplatte 25 montiert und dort vorzugsweise fünffach verlötet. Auch in dieser Ausführungsform ist eine Kabeldurchführung 18a vorgesehen, durch welche Kabel vom hinteren Ende des Elektromotors 14 zur Printplatte 25 geführt werden.

Die Kabeldurchführung 18a ist etwas kürzer als die entsprechende Kabeldurchführung 18a bei der Batterieversion. Entsprechend ist das Schalterkompartiment 19 bei der Akkuversion etwas länger. In dem Motorkompartiment 18 ist wiederum der Elektromotor 14 in einer Schrägstellung angeordnet und wird an seiner Unterseite abgestützt von der Schräge 12a des Trägerelements 12.

Der auf der Rotationsachse A_{M} des Elektromotors aufgebrachte Exzenter 15 steht wiederum über den vorderen Motoranschlag 27 hinaus und ragt in den Basisbereich 46 der steckerartigen Kupplungsstruktur 40 hinein (d.h. wie bei der oben beschriebenen Batterieversion) .

Auch in der Akkuversion definieren die steckerartige Kupplungsstruktur 40 und die im Wesentlichen gegengleich ausgebildete, buchsenartige Kupplungsstruktur 70 die Schnittstelle X. Der Kopfbereich 63 des Zahnbürsten-Aufsteckteils 60 ist bei dieser Ausführungsform etwas anders ausgestaltet als bei der Batterieversion.

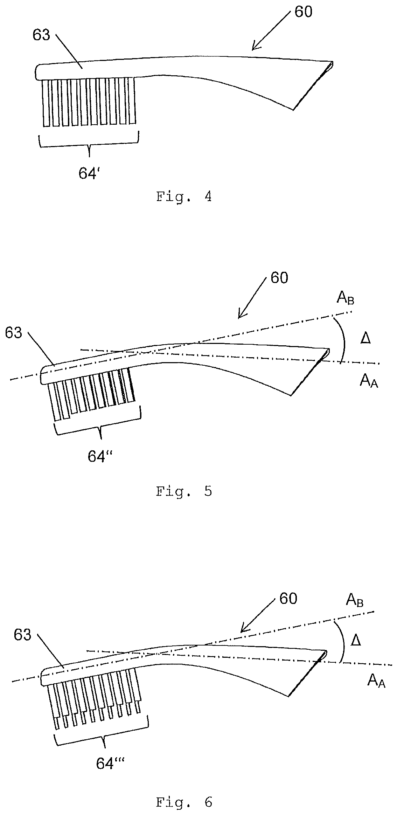

Anstelle eines in dem Kopfbereich montierten Trägerplättchens mit im AFT-Verfahren aufgebrachten Borsten bzw. Borstenbündel der Reinigungselementen 64 sind hier die Borstenbündel 64` im konventionellen Verfahren direkt in den Kopfbereich 63 eingestanzt. Des Weiteren weist die Längsachse des Kopfbereichs A_{B} hier weniger Neigung gegenüber der Längsachse des Handgriffs A_{G} auf. Allerdings kann auch in der Akkuversion das Zahnbürstenaufsteckteil der Batterieversion verwendet werden. Weitere Ausführungen zum entsprechenden Aufsteckteil sind in der Beschreibung zu Fig. 4 zu finden, die entsprechenden Aufsteckteile entsprechen sich.

Bezüglich der konkreten Abmessungen, Materialien und sonstigen Ausgestaltungen wird im Übrigen auch auf die obige allgemeine Beschreibung zur Akkuversion verwiesen.

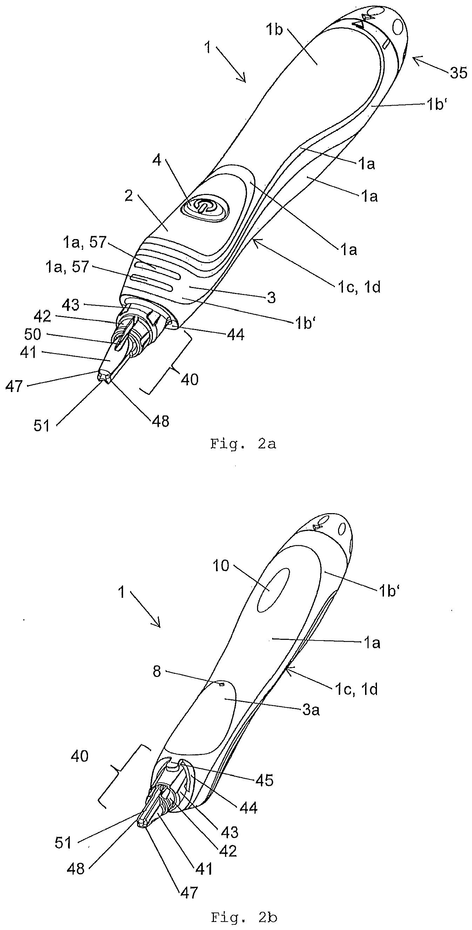

In **Fig. 2a** wird nun ein Handgriff 1, das heisst ein Handteil 1c mit Verschlussdeckel 35 aber ohne Aufsteckteil 60 in perspektivischer Ansicht dargestellt.

Man erkennt insbesondere die schräge Anschlagfläche 44 des Handgriffs 1, an welche die Frontpartie 3 mit der Kombination aus Hart- und Weichkomponente angrenzt. Von der schrägen Anschlagfläche 44 ragt horizontal, d.h. im Wesentlichen parallel zur Längsachse A_{G} des Handgriffs 1, die steckerartige Kupplungsstruktur 40 ab. Diese unterteilt sich in drei Stufen, nämlich in die erste Stufe 41 am freien Ende, die zweite Stufe 42 sowie die dritte Stufe 43, welche in die schräge Anschlagfläche 44 übergeht.

Die erste Stufe 41 unterteilt sich in ein oberes Teilelement 47 und ein unteres Teilelement 48. Die erste Stufe 41 steigt in Richtung der zweiten Stufe rampenförmig an. Etwa auf der Hälfte der ersten Stufe 41 beginnt eine eckige Nut 50, welche sich auch über die gesamte zweite Stufe 42 bis zum Anschlag an die dritte Stufe 43 fortsetzt.

Frontal betrachtet weisen das obere und das untere Teilelement 47, 48 zusammen einen in etwa zahnförmigen Umriss auf (am freien Ende), welcher in Richtung des Handgriffs am Ende der ersten Stufe eine etwa achtförmige Gestalt annimmt. Die zweite Stufe 42 sowie die dritte Stufe 43 sind im Wesentlichen rund und im Wesentlichen zylindrisch ausgebildet.

Die **Fig. 2b** veranschaulicht eine perspektivische Ansicht des um 180 ° gedrehten Handgriffs 1 gemäss **Fig. 2a****.** Man erkennt zunächst wieder die Flachstelle 10 zum Ablegen des Handgriffs 1 sowie die Rückenpartie 3a, welche im Gegensatz zur Flachstelle 10, aus einer Weichkomponente 1b gebildet ist.

An dem in Richtung des Verschlussdeckels 35 gewandten Endes der Rückenpartie 3a ist weiterhin ein Entlüftungsloch 8 vorgesehen (gilt für alle Ausführungsformen). Durch dieses Entlüftungsloch 8 können Gase aus dem Innenraum des Handgriffs 1 entweichen.

Von der schrägen Anschlagfläche 44 aus entspringt an der Unterseite des Handgriffs 1 der Nocken 45, welcher in etwa ein Drittel der Länge der Unterseite der dritten Stufe 43 umfasst.

An der Unterseite des unteren Teilelements 48 der ersten Stufe 41 ist eine runde Nut 51 vorgesehen, welche sich über die gesamte zweite Stufe 42 fortsetzt. Die eckige Nut 50 auf der Oberseite des oberen Teilelements 47 und die runde Nut 51 an der unteren Seite des unteren Teilelements 48 dienen insbesondere zu einem sicheren und verdrehungsfreien Einführen in die entsprechende buchsenartige Kupplungsstruktur 70 eines erfindungsgemässen Aufsteckteils 60.

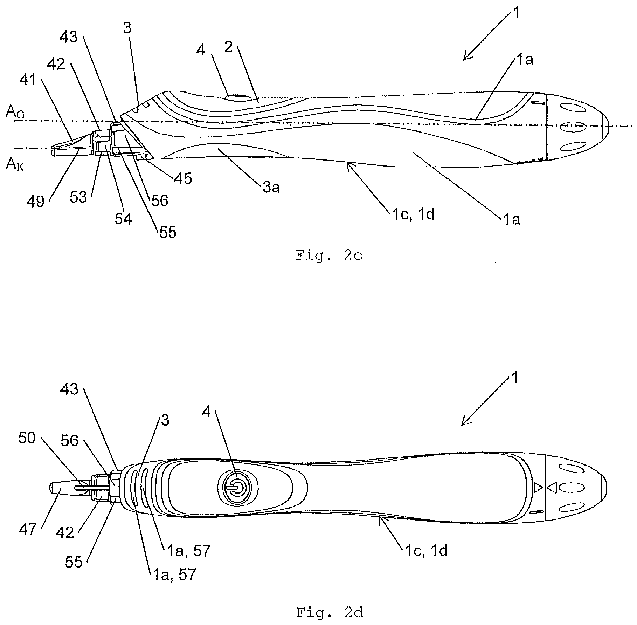

Die **Fig. 2c** ist eine Seitenansicht des Handgriffs 1 gemäss **Fig. 2a****.** Man erkennt wiederum an der Unterseite der dritten Stufe 43 den Nocken 45 sowie einen umfänglichen Vorsprung 56 der dritten Stufe und eine umfängliche Aussparung 55 der dritten Stufe. Auch die zweite Stufe 42 weist jeweils umfängliche Vorsprünge 54 und umfängliche Aussparungen 53 auf, welche in der Regel versetzt angeordnet sind zu den umfänglichen Vorsprüngen bzw. Aussparungen der dritten Stufe 43. Des Weiteren ist die Längsachse A_{K} der steckerartigen Kupplungsstruktur 40 parallel versetzt ist zur Längsachse A_{G} des Handgriffs 1.

Die erste Stufe weist zudem eine zwischen dem oberen Teilelement 47 und dem unteren Teilelement 48 verlaufende Nut 49 auf, welche über die gesamte Länge der ersten Stufe 41 verläuft. Die Nut 49 ist etwa in Form einer Einkerbung ausgebildet, was zu der achtförmigen Gestalt, insbesondere des hinteren Endes der ersten Stufe, führt.

In der Draufsicht gemäss **Fig. 2d** erkennt man, dass die eckige Nut 50 etwa nach der Hälfte der ersten Stufe 41 bzw. des oberen Teilelements 47 beginnt und sich bis zum Anschlag zur dritten Stufe 43 fortsetzt. Zudem erkennt man nochmals die umfänglichen Aussparungen 55 und die umfänglichen Vorsprünge 56 der dritten Stufe.

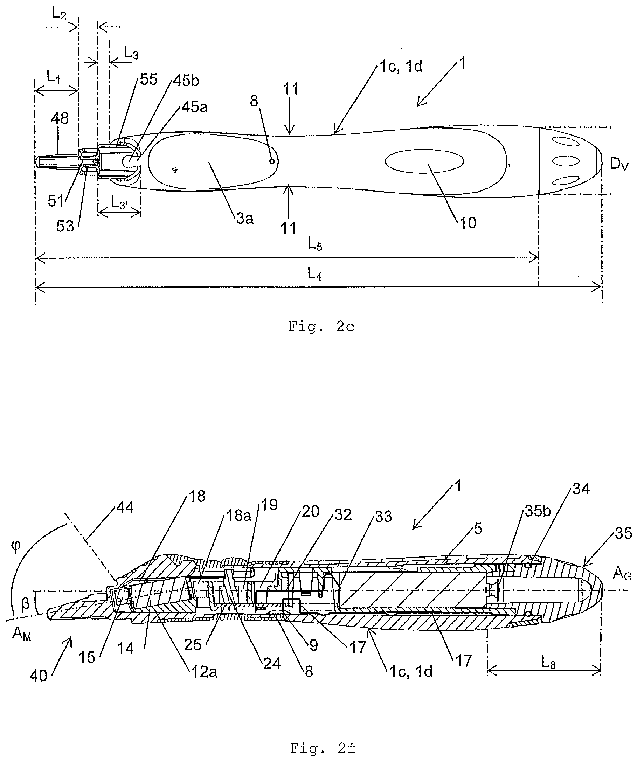

Aus der in **Fig. 2e** gezeigten Unteransicht des Handgriffs 1 lassen sich die Längenverhältnisse der einzelnen Stufen der steckerartigen Kupplungsstruktur 40 des Handgriffs 1 erkennen. Die erste Stufe 41 weist eine Länge L₁ auf, die zweite Stufe 42 weist eine Länge L₂ auf und die dritte Stufe 43 weist eine Länge L₃ an der Oberseite sowie eine Länge L₃' an der Unterseite auf. Die erste Stufe 41 ist länger als die zweite Stufe 42 und in etwa gleich lang wie die dritte Stufe 43 an ihrer Unterseite. Die dritte Stufe 43 ist an ihrer Unterseite entsprechend länger als die zweite Stufe 42, allerdings an ihrer Oberseite etwas kürzer als die zweite Stufe 42.

An der Unterseite der dritten Stufe 43 ist wiederum der Nocken 45 zu sehen, welcher sich aufteilt in den Stamm 45a sowie die Krone 45b. Diese Ausgestaltung sichert ein besonders gutes Verrasten mit der gegengleich ausgebildeten Ausnehmung 67 des Aufsteckteils 60.

Die Rückenpartie 3a weist an ihrem zum Verschlussdeckel 35 hin gelegenen Ende wiederum das Entlüftungsloch 8 auf. Weiterhin erkennt man wiederum die Taillierung 11 und die Flachstelle 10.

Der maximale Durchmesser des Verschlussdeckels 35 wird mit Dᵥ bezeichnet. Die Länge des erfindungsgemässen Handgriffs 1 mit Verschlussdeckel 35, gemessen vom freien Ende der steckerartigen Kupplungsstruktur 40 bis zum hinteren Ende des Verschlussdeckels 35 wird mit L₄ bezeichnet und die Gesamtlänge des Handgriffs 1 ohne Verschlussdeckel, d.h. gemessen vom freien Ende der steckerartigen Kupplungsstruktur 40 bis zum hinteren Ende des Handgriffs wird mit L₅ bezeichnet.

Bezüglich der konkreten Abmessungen, Materialien und sonstigen Ausgestaltungen wird im Übrigen auch auf die obige allgemeine Beschreibung zum Handgriff verwiesen. Die **Fig. 2f** ist eine Querschnittsansicht des Handgriffs gemäss **Fig. 2a** und entspricht der **Fig. le** (nur ohne Aufsteckteil 60). Zusätzlich wird hier die Gesamtlänge des Verschlussdeckels bezeichnet, und zwar mit L₈. Des Weiteren ist gezeigt, dass zwischen der Längsachse des Handgriffs A_{G} sowie der Rotationsachse des Elektromotors A_{M} ein Winkel β gebildet wird, welcher der Schrägstellung des Elektromotors 14 entspricht. Vermittels der hierdurch erreichten Einbettung des Exzenters 15 in den Basisbereich 46 der steckerartigen Kupplungsstruktur 40 kann eine besonders effiziente Vibrationsübertragung erreicht werden. Im Übrigen bildet die Rotationsachse A_{M} des Elektromotors 14 mit der Anschlagfläche 44 des Handgriffs 1 einen Winkel ϕ, welcher ebenfalls für eine optimale Vibrationsübertragung abgestimmt ist (vgl. konkrete Zahlen in der obigen allgemeinen Beschreibung).

Im Übrigen erkennt man, dass an der Stelle, an welcher das Trägerelement-Kontaktblech 17 an der Printplatte 25 befestigt ist, die Entlüftungsmembrane 9 vorgesehen ist, welche verhindert, dass Gase von aussen in den Innenraum des Handgriffs 1 penetrieren können. Die übrigen Bezugszeichen bezeichnen - wie auch bei allen anderen Ausführungsformen - jeweils dieselben Komponenten.

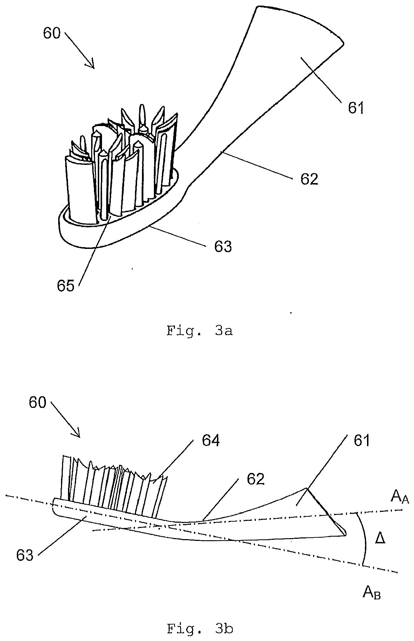

**Fig. 3a** veranschaulicht eine perspektivische Ansicht einer ersten beispielhaften Form eines Aufsteckteils 60 für eine Zahnbürste. Dieses weist wiederum einen Basisbereich 61 sowie einen Kopfbereich 63 auf, welche durch einen Halsbereich 62 verbunden sind. In dieser Ausführungsform ist im Kopfbereich 63 ein Trägerplättchen 65 montiert, auf welchem die Reinigungselemente 64 angeordnet sind (AFT-Verfahren).

Die **Fig. 3b** ist eine Seitenansicht des Aufsteckteils 60 für eine Zahnbürste gemäss **Fig. 3a****.** Man erkennt, dass bei dieser Ausführungsform der Basisbereich 61 (bzw. der Basisbereich 61 und der Halsbereich 62) einen Winkel gegenüber dem flachen Kopfbereich 63 aufweisen. Der Winkel ist definiert als Winkel zwischen der Längsachse des Aufsteckteils A_{A} und der Längsachse des Kopfbereichs A_{B} und wird mit Δ bezeichnet. Die Masse für den Winkel sind der obigen Beschreibung zu entnehmen.

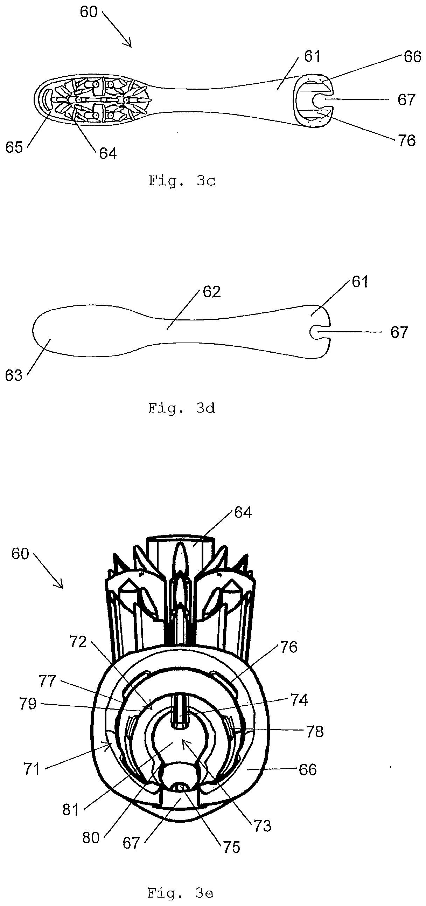

**Fig. 3c** zeigt eine Draufsicht auf ein Aufsteckteil 60 für eine Zahnbürste gemäss Fig. 3a. Man erkennt wiederum die Reinigungselemente 64, welche auf den Trägerplättchen 65 angeordnet sind. Des Weiteren erkennt man die schräge Anschlagfläche 66 am Basisbereich 61 der Aufsteckzahnbürste 60. An die zum Nocken 45 des Handgriffs 1 gegengleich ausgebildete Ausnehmung 67 der Aufsteckzahnbürste 60 grenzen an der Innenseite jeweils umfängliche Aussparungen 76 an.

Die **Fig. 3d** ist eine Unteransicht des Aufsteckteils 60 für eine Zahnbürste. Man erkennt wiederum den Kopfbereich 63, den Halsbereich 62 sowie den Basisbereich 61 mit der Ausnehmung 67.

**Fig. 3e** ist eine Hinteransicht des Aufsteckteils 60 für eine Zahnbürste, d.h. es wird der Innenraum des Aufsteckteils 60 für eine Zahnbürste veranschaulicht.

Der Innenraum umfasst im Wesentlichen die buchsenartige Kupplungsstruktur 70, welche sich korrespondierend in drei Stufen unterteilt, nämlich die erste Stufe 71 (das Pendant zur dritten Stufe des Handgriffs), die zweite Stufe 72 (das Pendant zur zweiten Stufe des Handgriffs) sowie die dritte Stufe 73 (das Pendant zur ersten Stufe des Handgriffs). Man erkennt des Weiteren die von der schrägen Anschlagfläche 66 ausgehend gebildete Ausnehmung 67 für den Nocken 45 des Handgriffs 1.

Die erste Stufe umfasst umfängliche Aussparungen 76 sowie umfängliche Vorsprünge 77. Die Aussparungen und Vorsprünge sind symmetrisch zu einander ausgebildet, wobei die Vorsprünge 77 der ersten Stufe 71 des Aufsteckteils 60 mit den entsprechenden umfänglichen Vorsprüngen 56 der dritten Stufe 43 des Handgriffs 1 in Anlage gelangen. Dadurch wird erreicht, dass die Luft beim Aufstecken des Aufsteckteils auf die Kupplungsstruktur 40 des Handgriffs 1 entweichen kann.

Insoweit ist hier bei der ersten Stufe 71 der buchsenartigen Kupplungsstruktur 70 und der dritten Stufe 43 der steckerartigen Kupplungsstruktur 40 keine (vollständige) Gegengleichheit gegeben. Gleiches gilt auch im Hinblick auf die zweite Stufe 72 der buchsenartigen Kupplungsstruktur 70, welche wiederum umfängliche Aussparungen 78 sowie umfängliche Vorsprünge 79 aufweist, wobei die umfänglichen Vorsprünge 79 dieser zweiten Stufe 72 in Anlage gelangen mit den umfänglichen Vorsprüngen 54 der zweiten Stufe 42 der steckerartigen Kupplungsstruktur 40 des Handgriffs 1. Diese Ausgestaltung dient ebenfalls der Entlüftung.

Die zweite Stufe 72 der buchsenartigen Kupplungsstruktur 70 weist aber an der Oberseite einen eckigen Kamm 74 auf, welcher in seiner Ausgestaltung mit der eckigen Nut 50 der steckerartigen Kupplungsstruktur 40 korrespondiert. Der eckige Kamm 74 setzt sich entsprechend von der zweiten Stufe 72 des zur dritten Stufe 73 der buchsenartigen Kupplungsstruktur 70 fort, so dass er vollständig in Eingriff mit der eckigen Nut 50 der steckerartigen Kupplungsstruktur 40 des Handgriffs 1 gelangen kann.

Auf der Unterseite der zweiten Stufe 72 der buchsenartigen Kupplungsstruktur 70 ist entsprechend ein runder Kamm 75 angeordnet, welcher mit der runden Nut 51 an der Unterseite des unteren Teilelements 48 der ersten Stufe 41 der steckerartigen Kupplungsstruktur 40 korrespondiert. Auch der runde Kamm 75 setzt sich über die dritte Stufe 73 der buchsenartigen Kupplungsstruktur 70 hinweg fort.

Die dritte Stufe 73 der buchsenartigen Kupplungsstruktur 70 weist entsprechend eine achtförmige Öffnung 81 auf, an deren Seiten jeweils eine spitz zulaufende Rippe 80 ausgebildet ist, wobei die spitz zulaufenden Rippen 80 mit den beiden Nuten 49 zwischen dem oberen Teilelement 47 und dem unteren Teilelement 48 der ersten Stufe 41 der steckerartigen Kupplungsstruktur 40 korrespondieren bzw. mit diesen in Eingriff gelangen.

Die vorstehend beschriebene Ausgestaltung der buchsenartigen Kupplungsstruktur 70 gilt im Übrigen für sämtliche erfindungsgemässen Aufsteckteile.

Die **Fig. 4 und 5** zeigen Seitenansichten von weiteren Ausführungsformen eines Zahnbürsten-Aufsteckteils 60. Die Ausführungsformen gemäss **Fig. 4** weist konventionelle Borstenbündel 64` im Kopfbereich 63 auf. Das Aufsteckteil 60 weist hier praktisch keinen Winkel auf. Der Winkel Δ ist quasi 0°.

In der Ausführungsform gemäss **Fig. 5** weisen die Borstenbündel 64" unterschiedliche Längen auf. Insbesondere die zum freien Ende des Kopfbereichs 63 hin angeordneten Borstenbündel 64" sind etwas länger ausgebildet als die übrigen Borstenbündel. Das Aufsteckteil 60 weist weiterhin einen Winkel Δ zwischen der Längsachse des Aufsteckteils A_{A} und der Längsachse des Kopfbereichs A_{B} auf. Die Masse für den Winkel sind der obigen Beschreibung zu entnehmen.

Bei der Ausführungsform gemäss **Fig. 6** weisen die im Kopfbereich 63 angeordneten Borstenbündel 64‴ jeweils eine Abstufung an ihrem freien Ende auf. Solche Ausgestaltungen dienen insbesondere einer verbesserten Reinigung der Zahnzwischenräume. Auch bei dieser Ausführungsform weist das Aufsteckteil 60 einen Winkel Δ auf. Die Masse für den Winkel sind der obigen Beschreibung zu entnehmen.

### Bezugszeichenliste:

- 1: Handgriff (= Handteil und Verschlussdeckel)
- 1a: Hartkomponente
- 1b: Weichkomponente
- 1b': weitere Weichkomponente
- 1c: Handteil (= Handkörper und Innenleben)
- 1d: Handkörper (= Grundkörper und Umspritzkörper)
- 2: Schalterpartie (aus Weichkomponente 1b')
- 3: Frontpartie (aus Weichkomponente 1b')
- 3a: Rückenpartie (aus Weichkomponente 1b')
- 4: Ein-/Ausschalter-Symbol
- 5: Grundkörper (aus Hartkomponente)
- 6: erste Markierung (dreieckförmig, auf Handteil, ggü. 37 im verschlossenen Zustand)
- 7: zweite Markierung (strichartig, auf Handteil ggü 37 im nicht verschlossenen Zustand)
- 8: Entlüftungsloch
- 9: Entlüftungsmembrane
- 10: Flachstelle
- 10a: Flachstelle am Aufsteckteil
- 11: Taillierung
- 12: Trägerelement
- 12a: Schräge des Trägerelements
- 14: Elektromotor / Vibrationsmotor
- 15: Exzenter
- 17: Trägerelement-Kontaktblech
- 18: Motorkompartiment
- 18a: Kabeldurchführung
- 19: Schalterkompartiment
- 20: Kontaktblechkompartiment (Batterie-Version) für das Batterie-Kontaktblech
- 21: Batteriekompartiment
- 21a: Akkukompartiment
- 22: Buchsenkompartiment
- 23: Anschlusskompartiment
- 24: Schalter
- 25: Printplatte
- 26: Rastnasen
- 27: vorderer Motoranschlag
- 28: hinterer Motoranschlag
- 29: Dichtung (am Trägerelement der Akku-Version)
- 30: Buchse
- 30a: Buchsenanschlüsse (zur Printplatte)
- 31: Kontaktelement der Buchse
- 31b: vorderer Anschlag der Buchse
- 32: Batterie-Kontaktblech
- 33: Kontaktzunge des Batterie-Kontaktblechs 32
- 34: Dichtungsring des Verschlussdeckels
- 35: Verschlussdeckel
- 35a: Deckelhohlraum (des Verschlussdeckels 35)
- 35b: Kontaktblech des Verschlussdeckels 35
- 35c: Federblechelement (des Verschlussdeckels 35)
- 36: Einkerbungen
- 37: Markierung (dreieckförmig, ggü 6 im verschlossenen Zustand)
- 38: Markierung (dreieckförmig, auf Rückseite/Unterseite)
- 39: Batterie
- 39a: Batteriepol (Deckelseitig)
- 40: Steckerartige Kupplungsstruktur des Handgriffs
- 41: Erste Stufe (der Kupplungsstruktur des Handteils - am freien Ende)
- 42: Zweite Stufe (der Kupplungsstruktur des Handteils - in der Mitte)
- 43: Dritte Stufe (der Kupplungsstruktur des Handteils - an Anschlagfläche anliegend)
- 44: Anschlagfläche des Handteils
- 45: Nocken
- 45a: Stamm
- 45b: Krone
- 46: Basisbereich der steckerartigen Kupplungsstruktur
- 47: Oberes Teilelement (der ersten Stufe 41 des Handteils)
- 48: Unteres Teilelement (der ersten Stufe 41 des Handteils)
- 49: Nut zwischen dem oberen und dem unteren Teilelement 47, 48 der ersten Stufe 41 des Handteils
- 50: Eckige Nut (auf der Oberseite der steckerartigen Kupplungsstruktur 40)
- 51: Runde Nut (auf der Unterseite der steckerartigen Kupplungsstruktur 40)
- 52: Übergangsbereich von der ersten zur zweiten Stufe 42 der steckerartigen Kupplungsstruktur 40
- 53: Umfängliche Aussparungen (der zweiten Stufe 42 der steckerartigen Kupplungsstruktur 40)
- 54: Umfängliche Vorsprünge (der zweiten Stufe 42 der steckerartigen Kupplungsstruktur 40)
- 55: Umfängliche Aussparungen (der dritten Stufe 43 der steckerartigen Kupplungsstruktur 40)
- 56: Umfängliche Vorsprünge (der dritten Stufe 43 der steckerartigen Kupplungsstruktur 40)
- 57: Stege
- 58: Akku
- 60: Aufsteckteil
- 61: Basisbereich des Aufsteckteils
- 62: Halsbereich des Aufsteckteils
- 63: Kopfbereich des Aufsteckteils
- 63': Grundfläche (Austrittsfläche Borsten)
- 64: Reinigungselemente des Aufsteckteils (Borsten bzw. Borstenbündel und/oder weichelastischen Reinigungs- und Massageelemente)
- 64': Borstenbündel des Aufsteckteils
- 64": Borstenbündel des Aufsteckteils
- 64‴: Borstenbündel des Aufsteckteils
- 65: Trägerplättchen (AFT) des Aufsteckteils
- 66: Anschlagfläche des Aufsteckteils
- 67: Ausnehmung auf dem Aufsteckteil
- 70: Buchsenartige Kupplungsstruktur des Aufsteckteils
- 71: Erste Stufe der Kupplungsstruktur des Aufsteckteils (am freien Ende - Korrespondierend mit der dritten Stufe der Kupplungsstruktur des Handteils)
- 72: Zweite Stufe der Kupplungsstruktur des Aufsteckteils (in der Mitte - korrespondierend mit der zweiten Stufe der Kupplungsstruktur des Handteils)
- 73: Dritte Stufe der Kupplungsstruktur des Aufsteckteils (zu Innerst - korrespondierend mit der ersten Stufe der Kupplungsstruktur des Handteils)
- 74: Eckiger Kamm (auf Oberseite/Vorderseite des Aufsteckteils)
- 75: Runder Kamm (auf Unterseite/Rückseite des Aufsteckteils)
- 76: Umfängliche Aussparungen (der ersten Stufe 71 der buchsenartigen Kupplungsstruktur 70)
- 77: Umfängliche Vorsprünge (der ersten Stufe 71 der buchsenartigen Kupplungsstruktur 70)
- 78: Umfängliche Aussparungen (der zweiten Stufe 72 der buchsenartigen Kupplungsstruktur 70)
- 79: Umfängliche Vorsprünge (der zweiten Stufe 72 der buchsenartigen Kupplungsstruktur 70)
- 80: Rippen (der dritten Stufe 73 der buchsenartigen Kupplungsstruktur 70)
- 81: Achtförmige Öffnung (der dritten Stufe 73 der buchsenartigen Kupplungsstruktur 70)
- L₅: Gesamtlänge Handteil (Handgriff ohne Verschlussdeckel)
- L₆: Länge Anschlagkante-Griffende ohne Verschlussdeckel (Vorderseite bzw. Oberseite)
- L₇: Länge Anschlagkante-Griffende ohne Verschlussdeckel (Rückseite bzw. Unterseite)
- R: Einführrichtung Trägerelement
X Schnittstelle
α Winkel Anschlagfläche/A_{G}
α₂ Winkel A_{G} / Grundfläche
α₃ Winkel L_{B} / A_{G}
β Winkel A_{M}/A_{G}
β₂ Winkel A_{M} / Grundfläche
β₃ Winkel L_{B} / A_{M}
ϕ Winkel Anschlagfläche/A_{M}
Δ Winkel Aufsteckteil

## Patentansprüche

1. Zahnbürste mit einem Handgriff (1) mit einer Längsachse A_{G} und einem auf den Handgriff (1) aufbringbaren Aufsteckteil (60), wobei der Handgriff (1) einen Handkörper (1d) mit einem Grundkörper aufweist und das Aufsteckteil (60) einen Grundkörper aufweist, wobei von dem Handgriff (1) eine steckerartige Kupplungsstruktur (40) abragt, welche mit einer im Wesentlichen gegengleichen buchsenartigen Kupplungsstruktur (70) des Aufsteckteils (60) eine Schnittstelle X bildet, wobei die Schnittstelle X zumindest zwei Stufen (41, 42, 43) mit unterschiedlicher Umfangsgeometrie aufweist, wobei zumindest eine der Stufen (41, 42, 43) eine Verdrehsicherung zwischen dem Handgriff (1) und dem Aufsteckteil (60) umfasst und wobei eine Anschlagfläche (44) des Handgriffs (1) für das Aufsteckteil (60) schräg zur Längsachse A_{G} des Handgriffs (1) verläuft, wobei eine Längsachse des Aufsteckteils A_{A} die Längsachse der buchsenartigen Kupplungsstruktur (70) bezeichnet, welche im Basisbereich des Aufsteckteils (60) liegt, wobei eine Längsachse des Kopfbereichs A_{B} entsprechend im Kopfbereich des Aufsteckteils (60) liegt und wobei ein zwischen A_{A} und A_{B} liegender Winkel Δ zwischen 10° und 30° beträgt.

2. Zahnbürste gemäss Anspruch 1, **dadurch gekennzeichnet, dass** die Anschlagfläche (44) und die Längsachse A_{G} des Handgriffs (1) einen Winkel α zwischen 30° und 70° vorzugsweise zwischen 45° und 55° einschliessen.

3. Zahnbürste gemäss Anspruch 1 oder 2, **dadurch gekennzeichnet, dass** die Abmessung von der Anschlagfläche (44) zum hinteren Ende des Handgriffs (1) auf der Vorderseite grösser ist als auf der Rückseite, so dass die Anschlagfläche (44) von vorne nach hinten verläuft.

4. Zahnbürste gemäss einem der vorhergehenden Ansprüche, **dadurch gekennzeichnet, dass** die steckerartige Kupplungsstruktur (40) des Handgriffs (1) und die gegengleiche buchsenartige Kupplungsstruktur (70) des Aufsteckteils (60) ein gerades Aufstecken ermöglichen, wobei vorzugsweise eine Längsachse A_{K} der steckerartigen Kupplungsstruktur (40) parallel versetzt ist zur Längsachse A_{G} des Handgriffs (1).

5. Zahnbürste gemäss einem der vorhergehenden Ansprüche, **dadurch gekennzeichnet, dass** wobei das Material aus welchem der Grundkörper des Handkörpers (1d) gebildet ist härter ist als das Material aus welchem der Grundkörper des Aufsteckteils (60) gebildet ist.

6. Zahnbürste gemäss einem der vorhergehenden Ansprüche, **dadurch gekennzeichnet, dass** das Aufsteckteil (60) über Zonen aus Weichmaterial verfügt.

7. Zahnbürste gemäss Anspruch 6, **dadurch gekennzeichnet, dass** das Aufsteckteil (60) eine Haltverbessrungsstruktur aufweist, wobei die Haltverbesserungsstruktur vorzugsweise Noppen und/oder Lamellen als Grundelement umfasst.

8. Zahnbürste gemäss Anspruch 7, **dadurch gekennzeichnet, dass** die Höhe des Grundelements zwischen 0.2 mm und 2 mm, vorzugsweise zwischen 0.5 mm bis 1.5 mm, beträgt.

9. Zahnbürste gemäss einem der vorhergehenden Ansprüche, **dadurch gekennzeichnet, dass** die Kupplungsstruktur (40) mit einer Längsachse Aₖ vom Handgriff (1) abragt, und die Schnittstelle X drei Stufen (41, 42, 43) aufweist, wobei die dritte Stufe (43) eine an einen Haltebereich des Handgriffs (1) anschliessende hinterste Stufe (43) bildet und einen schrägen Abschluss aufweist, welcher eine Anschlagfläche (44) für das Aufsteckteil (60) bildet, welche schräg zur Längsachse Aₖ der Kupplungsstruktur (40) verläuft.

10. Zahnbürste nach Anspruch 9, **dadurch gekennzeichnet, dass** die Anschlagfläche (44) in einem Winkel α von 30° bis 70°, vorzugsweise von 45° bis 55°, zur Längsachse der Kupplungsstruktur Aₖ steht.

11. Zahnbürste nach Anspruch 9 oder 10, **dadurch gekennzeichnet, dass** die hinterste Stufe (43) als Auflagefläche zum Aufnehmen von Kräften über die Anschlagfläche (44) ausgebildet ist.

12. Zahnbürste gemäss einem der vorhergehenden Ansprüche, **dadurch gekennzeichnet, dass** der Handgriff (1) im Bereich der steckerartigen Kupplungsstruktur einen Nocken (45) aufweist, welcher mit einer gegengleichen Ausnehmung (67) des Aufsteckteils (60) in der Art einer Schnappverbindung zusammenwirkt.

13. Zahnbürste nach Anspruch 12, **dadurch gekennzeichnet, dass** die Länge der steckerartigen Kupplungsstruktur (40), gemessen vom freien Ende bis zum Ansatzpunkt des Nockens (45) 20 mm bis 40 mm, vorzugsweise 27 mm bis 33 mm, beträgt.

14. Zahnbürste gemäss Anspruch 12 oder 13, **dadurch gekennzeichnet, dass** die Ausnehmung (67) des Aufsteckteils Toleranzen gegenüber dem Nocken (45) aufweist von 0 bis 0,4 mm, vorzugsweise von 0,15 bis 0,25 mm.

15. Zahnbürste mit einem Handgriff (1) mit einer Längsachse A_{G} und einem auf den Handgriff (1) aufbringbaren Aufsteckteil (60), wobei der Handgriff (1) einen Handkörper (1d) mit einem Grundkörper aufweist und das Aufsteckteil (60) einen Grundkörper aufweist, wobei von dem Handgriff (1) eine steckerartige Kupplungsstruktur (40) abragt, welche mit einer im Wesentlichen gegengleichen buchsenartigen Kupplungsstruktur (70) des Aufsteckteils (60) eine Schnittstelle X bildet, wobei die Schnittstelle X zumindest drei Stufen (41, 42, 43) mit unterschiedlicher Umfangsgeometrie aufweist, wobei die dritte Stufe (43) eine an einen Haltebereich des Handgriffs (1) anschliessende hinterste Stufe (43) bildet, wobei zumindest eine der Stufen (41, 42, 43) eine Verdrehsicherung zwischen dem Handgriff (1) und dem Aufsteckteil (60) umfasst und wobei eine Anschlagfläche (44) des Handgriffs (1) für das Aufsteckteil (60) von vorne nach hinten und ein Winkel α, welcher von der Anschlagfläche (44) und der Längsachse A_{G} des Handgriffs (1) eingeschlossen wird, zwischen 30° bis 70°, vorzugsweise zwischen 45° bis 55°, verläuft, wobei das Material aus welchem der Grundkörper des Handkörpers (1d) gebildet ist härter ist als das Material aus welchem der Grundkörper des Aufsteckteils (60) gebildet ist.

16. Zahnbürste nach Anspruch 15, **dadurch gekennzeichnet, dass** die hinterste Stufe (43) einen Durchmesser zwischen 7 mm und 14 mm, vorzugsweise zwischen 9 mm und 11 mm, aufweist und eine der zumindest drei Stufen (41, 42) an der hintersten Stufe (43) anschliesst und einen Durchmesser zwischen 5 mm und 10 mm aufweist.

17. Zahnbürste nach Anspruch 15 oder 16, **dadurch gekennzeichnet, dass** die hinterste Stufe (43) einen kleineren Durchmesser aufweist als eine an die hinterste Stufe (43) anschliessende Stufe der zumindest drei Stufen (41, 42).

18. Zahnbürste nach einem der Ansprüche 15 bis 17, **dadurch gekennzeichnet, dass** eine der zumindest drei Stufen (41, 42) an der hintersten Stufe (43) anschliesst und eine konische Abschrägung aufweist.

19. Zahnbürste nach Anspruch 18, **dadurch gekennzeichnet, dass** der Handgriff (1) im Bereich der steckerartigen Kupplungsstruktur einen Nocken (45) aufweist, welcher mit einer gegengleichen Ausnehmung (67) des Aufsteckteils (60) in der Art einer Schnappverbindung zusammenwirkt, wobei der Nocken (45) auf der Unterseite der dritten Stufe aufgesetzt ist.

20. Zahnbürste nach Anspruch 19, **dadurch gekennzeichnet, dass** die dritte Stufe einen zweiten Nocken aufweist, welcher zum auf der Unterseite der dritten Stufe aufgesetzten Nocken spiegelbildlich angeordnet ist.

21. Zahnbürste nach Anspruch 19 oder 20, **dadurch gekennzeichnet, dass** der Nocken (45) eine Höhe von 1 mm bis 3 mm aufweist, bevorzugt von 1.5 mm bis 2.5 mm.

22. Zahnbürste nach einem der vorangehenden Ansprüche, **dadurch gekennzeichnet, dass** die Abmessung von der Anschlagfläche (44) zum hinteren Ende des Handgriffs (1) auf der Vorderseite grösser ist als auf der Rückseite, so dass die Anschlagfläche (44) von vorne nach hinten verläuft.

23. Zahnbürste nach einem der vorangehenden Ansprüche, **dadurch gekennzeichnet, dass** die hinterste Stufe (43) auf der Rückseite länger ausgebildet ist als auf der Vorderseite.

## Claims

1. A toothbrush comprising a handle (1) with a longitudinal axis AG, and a plug-on part (60) which can be attached to the handle (1), wherein the handle (1) comprises a hand body (1d) with a base body and the plug-on part (60) comprises a base body, wherein a plug-shaped coupling structure (40) protrudes from the handle (1), which plug-shaped coupling structure (40) forms an interface X with a substantially mirror-inverted socket-shaped coupling structure (70) of the plug-on part (60), wherein the interface X has at least two stages (41, 42, 43) with different circumferential geometry, wherein at least one of the stages (41, 42, 43) comprises a rotation-preventing means between the handle (1) and the plug-on part (60), and wherein a stop surface (44) of the handle (1) for the plug-on part (60) extends obliquely with respect to the longitudinal axis AG of the handle (1), wherein a longitudinal axis A_{A} of the plug-on part (60) designates the longitudinal axis of the socket-shaped coupling structure (70), the longitudinal axis A_{A} lying in a base region of the plug-on part (60), wherein a longitudinal axis A_{B} of a head region lies accordingly in the head region of the plug-on part (60) and wherein an angle Δ lying between A_{A} and A_{B} is between 10° and 30°.

2. The toothbrush according to claim 1, **characterized in that** the stop surface (44) and the longitudinal axis A_{G} of the handle (1) enclose an angle α of between 30° and 70°, preferably of between 45° and 55°.

3. The toothbrush according to claim 1 or 2, **characterized in that** the dimension from the stop surface (44) to the rear end of the handle (1) is greater on the front face than on the rear face, such that the stop surface (44) extends from the front rearward.

4. The toothbrush according to one of the preceding claims, **characterized in that** the plug-shaped coupling structure (40) of the handle (1) and the mirror-inverted socket-shaped coupling structure (70) of the plug-on part (60) allow a straight plugging-on, wherein preferably a longitudinal axis A_{K} of the plug-shaped coupling structure (40) is offset parallel to the longitudinal axis A_{G} of the handle (1) .

5. The toothbrush according to one of the preceding claims, **characterized in that** a material from which the base body of the hand body (1d) is formed is harder than a material from which the base body of the plug-on part (60) is formed.

6. The toothbrush according to one of the preceding claims, **characterized in that** the plug-on part (60) comprises zones made of a soft component.

7. The toothbrush according to claim 6, **characterized in that** the plug-on part (60) comprises a hold improvement structure, wherein the hold improvement structure preferably comprises knobs and/or lamellas as a base element.

8. The toothbrush according to claim 7, **characterized in that** the height of the base element is between 0.2 mm and 2 mm, preferably between 0.5 mm and 1.5 mm.

9. The toothbrush according to one of the preceding claims, **characterized in that** the coupling structure (40) protrudes with a longitudinal axis Aₖ from the handle (1), and the interface X comprises three stages (41, 42, 43), wherein the third stage (43) forms a rearmost stage adjoining a holding region of the handle (1) and has an oblique end, which forms a stop surface (44) for the plug-on part (60) which extends obliquely with respect to the longitudinal axis Aₖ of the coupling structure (40).

10. The toothbrush according to claim 9, **characterized in that** the stop surface (44) stands at an angle α of 30° to 70°, preferably of 45° to 55°, with respect to the longitudinal axis A_{K} of the coupling structure.

11. The toothbrush according to claim 9 or 10, **characterized in that** the rearmost stage (43) is configured as a support surface for taking up forces via the stop surface (44).

12. The toothbrush according to one of the preceding claims, **characterized in that** the handle (1) has a cam (45) in the region of the plug-shaped coupling structure, which cooperates with a mirror-inverted recess (67) of the plug-on part (60) in the manner of a snap-fit connection.

13. The toothbrush according to claim 12, **characterized in that** the length of the plug-shaped coupling structure (40), measured from the free end to the starting point of the cam (45), is 20 mm to 40 mm, preferably 27 mm to 33 mm.

14. The toothbrush according to claim 12 or 13, **characterized in that** the recess (67) of the plug-on part has tolerances, with respect to the cam (45), of 0 to 0.4 mm, preferably of 0.15 to 0.25 mm.

15. A toothbrush comprising a handle (1) with a longitudinal axis A_{G}, and a plug-on part (60) which can be attached to the handle (1), wherein the handle (1) comprises a hand body (1d) with a base body and the plug-on part (60) comprises a base body, wherein a plug-shaped coupling structure (40) protrudes from the handle (1), which plug-shaped coupling structure (40) forms an interface X with a substantially mirror-inverted socket-shaped coupling structure (70) of the plug-on part (60), wherein the interface X has at least three stages (41, 42, 43) with different circumferential geometry, wherein the third stage (43) forms a rearmost stage adjoining a holding region of the handle (1), wherein at least one of the stages (41, 42, 43) comprises a rotation-preventing means between the handle (1) and the plug-on part (60), and wherein a stop surface (44) of the handle (1) for the plug-on part (60) extends from the front rearward and an angle α, which is enclosed by the stop surface (44) and the longitudinal axis A_{G} of the handle (1) extends between 30° and 70°, preferably of between 45° and 55°, wherein the material from which the base body of the hand body (1d) is formed is harder than a material from which the base body of the plug-on part (60) is formed.

16. The toothbrush according to claim 15, **characterized in that** the rearmost stage (43) has a diameter between 7 mm to 14 mm, preferably between 9 mm and 11 mm, and one of the at least three stages (41, 42) adjoins the rearmost stage (43) and has a diameter between 5 mm and 10 mm.

17. The toothbrush according to claim 15 or 16, **characterized in that** the rearmost stage (43) has a smaller diameter than a stage of the at least three stages (41, 42) which adjoins the rearmost stage (43) .

18. The toothbrush according to one of the claims 15 to 17, **characterized in that** one of the at least three stages (41, 42) adjoins the rearmost stage (43) and has a conical beveling.

19. The toothbrush according to claim 18, **characterized in that** the handle (1) comprises in the region of the plug-shaped coupling structure a cam (45) which cooperates with a mirror-inverted recess (67) of the plug-on part (60) in the manner of a snap-fit connection, wherein the cam (45) is mounted on the underside of the third stage.

20. The toothbrush according to claim 19, **characterized in that** the third stage comprises a second cam which is arranged with mirror symmetry to the cam which is mounted on the underside of the third stage.

21. The toothbrush according to claim 19 or 20, **characterized in that** the height of the cam (45) is from 1 mm to 3 mm, preferably from 1.5 mm to 2.5 mm.

22. The toothbrush according to one of the preceding claims, **characterized in that** the dimension from the stop surface (44) to the rear end of the handle (1) is greater on the front face than on the rear face, such that the stop surface (44) extends from the front rearward.

23. The toothbrush according to one of the preceding claims, **characterized in that** the rearmost stage (43) is longer on the rear face than on the front face.

## Revendications

1. Brosse à dents comprenant un manche (1) présentant un axe longitudinal A_{G} et une partie enfichable (60) pouvant être montée sur le manche (1), dans laquelle le manche (1) comporte un corps tenu à la main (1d) comportant un corps de base et la partie enfichable (60) comporte un corps de base, une structure d'accouplement du type connecteur (40) dépassant du manche (1), laquelle forme une interface X avec une structure d'accouplement (70) du type douille sensiblement opposée de la partie enfichable (60), dans laquelle l'interface X comporte au moins deux étages (41, 42, 43) de géométries périphériques différentes, dans laquelle au moins l'un des étages (41, 42, 43) comporte un dispositif anti-rotation entre le manche (1) et la partie enfichable (60), et dans laquelle une surface de butée (44) du manche (1) pour la partie enfichable (60) s'étend de manière inclinée par rapport à l'axe longitudinal A_{G} du manche (1), dans laquelle un axe longitudinal de la partie enfichable A_{A} désigne l'axe longitudinal de la structure d'accouplement (70) du type douille, qui est situé dans le domaine de base de la partie enfichable (60), dans laquelle un axe longitudinal du domaine de tête A_{B} est situé de façon correspondante dans le domaine de tête de la partie enfichable (60) et dans laquelle un angle Δ situé entre A_{A} et A_{B} mesure entre 10° et 30°.

2. Brosse à dents selon la revendication 1, **caractérisée en ce que** la surface de butée (44) et l'axe longitudinal A_{G} du manche (1) forment un angle α qui est compris entre 30° et 70°, de préférence entre 45° et 55°.

3. Brosse à dents selon la revendication 1 ou 2, **caractérisée en ce que** la dimension de la surface de butée (44) à l'extrémité arrière du manche (1) est plus importante du côté avant que du côté arrière, de sorte que la surface de butée (44) s'étend de l'avant vers l'arrière.

4. Brosse à dents selon l'une quelconque des revendications précédentes, **caractérisée en ce que** la structure d'accouplement du type connecteur (40) du manche (1) et la structure d'accouplement du type douille (70) de la partie enfichable (60) opposée permettent un enfichage droit, dans laquelle un axe longitudinal A_{K} de la structure d'accouplement du type connecteur (40) est de préférence décalé parallèlement à l'axe longitudinal A_{G} du manche (1).

5. Brosse à dents selon l'une quelconque des revendications précédentes, **caractérisée en ce que** le matériau à partir duquel est formé le corps de base du corps tenu à la main (1d) est plus dur que le matériau à partir duquel est formé le corps de base de la partie enfichable (60).

6. Brosse à dents selon l'une quelconque des revendications précédentes, **caractérisée en ce que** la partie enfichable (60) dispose de zones en matériau mou.

7. Brosse à dents selon la revendication 6, **caractérisée en ce que** la partie enfichable (60) présente une structure d'amélioration de la tenue, la structure d'amélioration de la tenue comprenant de préférence des excroissances et/ou des lamelles comme élément de base.

8. Brosse à dents selon la revendication 7, **caractérisée en ce que** la hauteur des éléments de base est entre 0.2 mm et 2 mm, de préférence entre 0.5 mm et 1.5 mm.

9. Brosse à dents selon l'une quelconque des revendications précédentes, **caractérisée en ce que** la structure d'accouplement (40) dépasse avec un axe longitudinal Aₖ du manche (1), et l'interface X présente trois étages (41, 42, 43), dans laquelle le troisième étage (43) forme un étage le plus en arrière (43) suivant un domaine de tenue du manche (1) et présente une terminaison inclinée, laquelle forme une surface de butée (44) pour la partie enfichable (60), qui s'étend de façon inclinée par rapport à l'axe longitudinal Aₖ de la structure d'accouplement (40).

10. Brosse à dents selon la revendication 9, **caractérisée en ce que** la surface de butée (44) et l'axe longitudinal A_{K} de la structure d'accouplement forment un angle α qui est compris entre 30° et 70°, de préférence entre 45° et 55°.

11. Brosse à dents selon la revendication 9 ou 10, **caractérisée en ce que** l'étage le plus en arrière (43) est formé en tant qu'une surface d'appui pour absorber des forces par l'intermédiaire de la surface de butée (44).

12. Brosse à dents selon l'une quelconque des revendications précédentes, **caractérisée en ce que** le manche (1) présente dans le domaine de la structure d'accouplement du type connecteur une came (45) qui coopère avec un évidement (67) de la partie enfichable (60) opposée à la manière d'une liaison par encliquetage.

13. Brosse à dents selon la revendication 12, **caractérisée en ce que** la longueur de la structure d'accouplement du type connecteur (40), mesurée de l'extrémité libre au point de départ de la came (45), vaut 20 mm à 40 mm, de préférence 27 mm à 33 mm.

14. Brosse à dents selon la revendication 12 ou 13, **caractérisée en ce que** l'évidement (67) de la partie enfichable présente par rapport à la came (45) des tolérances de 0 à 0,4 mm, de préférence de 0,15 à 0,25 mm.

15. Brosse à dents comprenant un manche (1) présentant un axe longitudinal A_{G} et une partie enfichable (60) pouvant être montée sur le manche (1), dans laquelle le manche (1) comporte un corps tenu à la main (1d) comportant un corps de base et la partie enfichable (60) comporte un corps de base, dans laquelle une structure d'accouplement du type connecteur (40) dépasse du manche (1), laquelle forme une interface X avec une structure d'accouplement (70) du type douille sensiblement opposée de la partie enfichable (60), dans laquelle l'interface X comporte au moins deux étages (41, 42, 43) de géométries périphériques différentes, dans laquelle au moins l'un des étages (41, 42, 43) comporte un dispositif anti-rotation entre le manche (1) et la partie enfichable (60), et dans laquelle une surface de butée (44) du manche (1) pour la partie enfichable (60), dans laquelle le troisième étage (43) forme un étage le plus en arrière suivant un domaine de tenue du manche (1), dans laquelle au moins l'un des étages (41, 42, 43) comporte un dispositif anti-rotation entre le manche (1) et la partie enfichable (60), et dans laquelle une surface de butée (44) du manche (1) pour la partie enfichable (60) s'étend de l'avant vers l'arrière et définit un angle α, qui est formé par la surface de butée (44) et l'axe longitudinal A_{G} du manche (1) entre 30° et 70°, de préférence entre 45° et 55°, dans laquelle le matériau dont est fait le corps de base du corps tenu à la main (1d) est plus dur que le matériau dont est fait le corps de base la partie enfichable (60).

16. Brosse à dents selon la revendication 15, **caractérisée en ce que** l'étage le plus en arrière (43) présente un diamètre entre 7 mm et 14 mm, de préférence entre 9 mm et 11 mm, et un des au moins trois étages (41, 42) suit l'étage le plus en arrière (43) et présente un diamètre entre 5 mm et 10 mm.

17. Brosse à dents selon la revendication 15 ou 16, **caractérisée en ce que** l'étage le plus en arrière (43) présente un diamètre inférieur à celui d'un étage des au moins trois étages (41, 42) qui suit l'étage le plus en arrière (43).

18. Brosse à dents selon l'une des revendications 15 à 17, **caractérisée en ce qu'**un des au moins trois étages (41, 42) suit l'étage le plus en arrière (43) et présente un biseau conique.

19. Brosse à dents selon la revendication 18, **caractérisée en ce que** le manche (1) présente dans le domaine de la structure d'accouplement du type connecteur une came (45) qui coopère avec un évidement (67) de la partie enfichable (60) opposée à la manière d'une liaison par encliquetage, la came (45) étant présente sur la face inférieure du troisième étage.

20. Brosse à dents selon la revendication 19, **caractérisée en ce que** le troisième étage présente une came, qui est arrangée en miroir par rapport à la came présente sur la face inférieure du troisième étage.

21. Brosse à dents selon la revendication 19 ou 20, **caractérisée en ce que** la came (45) présente une hauteur de 1 mm à 3 mm, de préférence de 1.5 mm à 2.5 mm.

22. Brosse à dents selon l'une quelconque des revendications précédentes, **caractérisée en ce que** la dimension de la surface de butée (44) à l'extrémité arrière du manche (1) sur la face avant est plus grande que sur la face arrière, de telle sorte que la surface de butée (44) s'étend de l'avant vers l'arrière.

23. Brosse à dents selon l'une quelconque des revendications précédentes, **caractérisée en ce que** l'étage le plus en arrière (43) est formé en étant plus long sur la face arrière que sur la face avant.
